# EUROPEAN PATENT SPECIFICATION

(11) **EP 4 377 192 B1**
(45) Date of publication and mention of the grant of the patent: **19.11.2025**
(21) Application number: 22748476.3
(22) Date of filing: 22.07.2022
(51) Int. Cl.: B62K 5/06, B62M 6/55, B62M 9/02, B62K 5/08, B62K 25/28, B62M 9/12, B62J 27/00, B62J 50/21, B62J 50/25, B62J 9/23, B62M 6/85, H02K 21/24

(54) **RIDE-ON TYPE VEHICLE**
AUFSITZFAHRZEUG
VÉHICULE À CONDUCTEUR PORTÉ

(30) Priority: 29.07.2021 IT 202100020297
(43) Date of publication of application: 05.06.2024
(73) Proprietor: Interactive Fully Electrical Vehicles S.r.l., 10040 La Loggia (Torino) (IT)
(72) Inventor: PERLO, Pietro, 10040 La Loggia (Torino) (IT); PENSERINI, Davide, 10040 La Loggia (Torino) (IT); GROSSO, Marco, 10040 La Loggia (Torino) (IT); POZZATO, Sergio, 10040 La Loggia (Torino) (IT); INTROZZI, Riccardo, 10040 La Loggia (Torino) (IT); DALMASSO, Marco, 10040 La Loggia (Torino) (IT); USIGNOLO, Alessandro, 10040 La Loggia (Torino) (IT); BIASIOTTO, Marco, 10040 La Loggia (Torino) (IT)
(74) Representative: Buzzi, Notaro & Antonielli d'Oulx S.p.A.
(86) International application number: PCT/IB2022/056789
(87) International publication number: WO 2023/007331

(56) References cited:
- EP-A1- 0 776 818
- EP-B1- 3 573 885
- WO-A1-2005/066015
- WO-A1-2017/137923
- WO-A1-2020/026082
- US-A- 4 674 762
- US-A1- 2016 167 529
- US-B1- 8 672 075
- US-B1- 9 193 415

## Description

### Background of the invention

The present invention relates to the field of ride-on vehicles, of the general type comprising a frame bearing a saddle, a front wheel assembly carried by a steering assembly rotatably supported by the frame, two rear wheels carried by the frame, and a pedal crank assembly rotatably mounted on the frame, and connected to the hubs of the two rear wheels by means of a transmission system.

A ride-on vehicle of the type indicated above has been described and illustrated, for example, in the Applicant's documents WO 2018/138594 A1 and WO 2020/026082.

The Applicant has, meanwhile, continued the studies and investigations in this field by exploiting additional technologies that he has developed both in the field of electric cars (see, for example, WO2015/155697 A1, WO2015145285, WO2016/055873 A1, WO2016/055874 A1), and in the field of construction technologies of tubular frames (WO2018065946A1), and in the field of electric battery management and charging techniques, also with the aid of photovoltaic solar panels (Italian patent applications IT 102021000010370 and IT 102021000010373, still secret at the priority date of this application).

On the basis of this knowledge, the Applicant has faced the new problems that arise in the field of new generation ride-on vehicles, particularly in the field of ride-on vehicles with purely electric traction and/or electrically-assisted pedaling. In this sector, there is a need to develop architectures of electronic systems aimed at maximizing the levels of safety and energy efficiency, and also to allow, for example, the location and protection of the vehicle against theft and vandalism, and the security in communication of data.

Ride-on vehicles, in particular, bicycles and tricycles, both of the conventional type and of the pedal-assisted type, today find increasing diffusion not only for sports and entertainment activities, but also for work activities, for example, as vehicles for transport (cargo bicycles).

In terms of safety, there is a need to adopt electronic and electromechanical control systems and sensory systems that ensure maximum driving stability and assist the user in making quick decisions during dangerous conditions.

In all ride-on vehicles there is also the need to have a high-efficiency electric traction, capable of producing relatively high drive torques with relatively low energy consumption, and capable of recovering energy during deceleration and/or braking, or during descents.

The use of speed-change devices on pedal-assisted vehicles is also widespread, and also in this regard there is a need for improvement, both from the point of view of efficiency, and from the point of view of constructive simplicity and reduced overall dimensions.

Yet another need is to develop power supply systems for electric batteries based on photovoltaic solar cells integrated into the vehicle structure.

Yet another requirement is that of providing a system for continuous communication of the electronic control system of the vehicle with the vehicle manufacturer, in a similar way to what happens with electronic devices such as smartphones, tablets and the like, in order to be able to perform a periodic updating of the vehicle management algorithms and/or inform the owner of the need for preventive maintenance. Another need is to allow the location of the vehicle in real time in order to reduce the risk of theft and vandalism.

Another need is to make the vehicle unusable for those who do not have the necessary authorizations.

Another need is to equip the vehicle with a light and sturdy frame, which is - at the same time - simple and economical.

Yet another need is to equip the vehicle with wheels that have a very light structure, but are extremely resistant to lateral and longitudinal stresses, and nevertheless of economical production.

Yet another need is to leave the designer a great deal of flexibility in choosing a configuration that has high aerodynamic efficiency and - at the same time - an attractive and customizable appearance with writings or logos.

Another need is to be able to remotely monitor the environment surrounding the vehicle.

A vehicle according to the preamble of claim 1 is known from any of the documents WO 2005/066015 A1, WO 2017/137923 A1 and US 8 672 075 B1.

### Object of the invention

The main object of the present invention is to optimally satisfy all the above requirements.

In particular, it is an object of the invention to provide a ride-on type vehicle which has a high degree of safety, a high driving stability in all conditions of use and - in particular - with any type and condition of the road surface and finally, which achieves a high level of comfort for the rider.

Another object of the invention is to achieve the aforesaid objective with a relatively simple structure and relatively low cost.

Another object of the invention is to provide a ride-on type vehicle suitable to be configured as a pedal-assisted vehicle or a purely electric vehicle, with a highly efficient electric traction system, capable above all of producing relatively high torques with relatively low energy consumption, and also able to recover energy when decelerating, braking or descending.

Yet another object of the invention is to provide a ride-on type vehicle particularly suitable for being fitted out in a cargo configuration with high ergonomics and efficiency.

Another object of the invention is that of producing a vehicle of the type indicated above configured in such a way as to allow extensive use of photovoltaic solar panels, to produce electric energy for recharging the vehicle battery intended to power the electric traction motor.

### Summary of the invention

In view of achieving the aforesaid objects, the invention relates to a ride-on vehicle having the characteristics of claims 1.

In a preferred embodiment wherein the vehicle is configured as a pedal-assisted vehicle, the vehicle is also characterized in that:
- the vehicle comprises an axial flow electric motor carried by the vehicle frame and associated with the pedal crank assembly,
- the axial flux electric motor includes a motor body, with at least one stator ring, carried by the vehicle frame, and at least one rotor ring carried by a crankshaft, which is rotatably supported within the body of the axial flux electric motor,
- said at least one rotor ring of said axial flow electric motor is connected in rotation, directly or indirectly, with said outlet wheel of the pedal crank assembly,
- the pedal cranks of the pedal crank assembly are mounted on said crankshaft,
- at least one free wheel is interposed between each pedal crank and said outlet wheel of the pedal crank assembly, said at least one free wheel being configured in such a way that the outlet wheel of the pedal crank assembly is permanently connected in rotation with the rear wheels of the vehicle even when the pedal cranks are stationary, which allows the axial flow electric motor to operate as a generator in the operating conditions wherein the rear wheels drive the motor in rotation.

In the aforesaid preferred embodiment, the outlet wheel of the pedal crank assembly is a crown gear or pulley gear mounted around a rotor ring of the axial flux electric motor, having a peripheral portion protruding outside of a casing of the axial flow electric motor.

In a first solution, the aforesaid at least one free wheel is a single free wheel interposed between said rotor ring carrying the outlet wheel of the pedal crank assembly and said crankshaft. In a second solution, the aforesaid at least one free wheel comprises two free wheels interposed, respectively, between the pedal cranks and said crankshaft.

In a different embodiment of the vehicle in the pedal-assisted configuration, the electric motor of the vehicle is still an electric motor with axial flow, but is positioned at the rear, between the two rear wheels of the vehicle. In this case, the hubs of the two rear wheels are connected by means of two respective axle shafts and homokinetic joints to the opposite ends of the crankshaft of the axial flow electric motor. The motor is carried centrally by the vehicle frame, in the space between the two rear wheels, and includes at least one rotor ring connected in rotation with said crankshaft, and at least one stator ring rigidly supported by the casing of said axial flux electric motor, said crankshaft being rotatably mounted within said at least one stator ring within said motor casing.

Axial flux electric motors are known in the art and have been identified by the Applicant as an ideal solution in a ride-on electric vehicle with pedal-assistance or, alternatively, purely electric, thanks to their ability to deliver high torques without requiring large energy expenditure. In an electric motor, the torque delivered is a function of the square of the rotor radius, which allows the torque to be multiplied simply by increasing the radial dimension of the motor. For example, an axial flux motor with power limited to 250 W, diameter close to 200 mm, speed between 0 rpm and 200 rpm, may produce peak torques higher than 200 Nm and satisfy all speed requirements even on high slope roads. The motor is light, less than 50 mm deep, and easily adaptable to the torque needs without losing the need for reducing energy consumption, thus making the use of the gear change device unnecessary. The motor may be inserted in the pedal area or on the intermediate transmission shaft, ensuring energy recovery in every pedal-assisted situation.

In one embodiment example of the invention, wherein the vehicle may also be equipped with a radial flow motor, a speed change device is provided, which is associated with said intermediate transmission shaft and operationally interposed between the intermediate transmission shaft and the front transmission belt or chain. In this example, said speed change device may comprise a pinion pack mounted on said intermediate transmission shaft and a derailleur device. Alternatively, the aforesaid gear change device may be integrated into the motor itself and may be, for example, a planetary gear change device or be a gear change device of the type with several discrete ratios. It is, however, possible to envisage a gear change device of any known type, which is not part of the motor assembly.

In the preferred embodiment, a braking system is associated with said front wheel and each of said rear wheels, for example, with conventional bicycle brakes or disc brakes, actuated via a Bowden cable or via a hydraulic pump.

In the case of this example, each of the aforesaid longitudinal arms also consists of a tube with a quadrangular cross-section and/or a variable cross-section. Preferably, the frame also includes a longitudinal central arm projecting rearwardly from said rear reticular structure, for supporting a luggage container of the vehicle.

Embodiments are envisaged wherein the distance between the two rear wheels is of an interval from 10 cm to 16 cm, and is, therefore, sufficiently small to allow the pedal cranks of the vehicle to rotate outside of the two rear wheels without interfering with the rear wheels, so as to allow a relatively limited overall length of the vehicle. Embodiments are also envisaged wherein the distance between the two rear wheels is of an interval from 16 cm to 35 cm, so as to allow greater stability of the vehicle, and to enable the provision of a high capacity luggage container, which also extends into the space between the two rear wheels, the frame of the vehicle being configured to keep the axis of the pedal crank assembly sufficiently spaced apart to prevent interference between the pedal cranks and the rear wheels.

In a cargo configuration, the rear reticular structure of the vehicle frame carries a luggage container-rack, arranged in a space between the two rear wheels, and having an enlarged upper portion, protruding outside the two rear wheels, from which two side walls extend downwards, arranged outside the two rear wheels and bearing a distribution of photovoltaic solar cells, to supply electricity to a vehicle battery that powers the electric motor of the vehicle, as well as, if provided, sensor assistance systems for the rider, a communication system and a thermal conditioning system for the luggage container. The container (or rack) of the luggage has an upper cover also bearing a distribution of photovoltaic solar cells. In a preferred embodiment, the upper longitudinal tube and the lower longitudinal tube of the frame support two side panels carrying a distribution of photovoltaic solar cells.

In one example, to ensure the highest level of safety, a sensory system is provided, which comprises a camera and/or an ultrasonic sensor system that analyzes the environment in front of the vehicle and - in the event of danger - acts on an acoustic system that warns the cyclist. The images are processed by artificial intelligence algorithms that enable acting on the motor controller to reduce its speed. The camera and motor are, therefore, interfaced to reduce the speed of the vehicle in a fraction of the time it would take the cyclist with his own perception and reaction times, notoriously increasing with age, and particularly critical for elderly people who are driving an electric vehicle that is faster than muscle-powered ones. A second camera that monitors the space behind the vehicle, also equipped with an artificial intelligence system, informs the cyclist by means of an acoustic signal of any danger coming from the rear. This second camera may also be assisted by an ultrasonic sensor system that helps to detect distances.

Both cameras can be remotely enabled by the vehicle owner in order to monitor the environment surrounding the vehicle, to prevent theft, vandalism and/or to record events or the type of road, with periodic updating of image recordings. The images from the cameras may then be transmitted to the owner's mobile phone at any time.

To inform the cyclist in advance of the need for any maintenance, to remotely update the parameters of the vehicle and to be able to trace the vehicle at any time, a GPS-GSM system is integrated into the gateway electronic card that allows real-time communication with maximum level of "security" of data transmission.

To maximize the transfer of the energy produced by the photovoltaic panels, each subassembly of panels has its own DC-DC module with its own MPPT integrated; in addition, the partition of the panels is used for balancing the battery pack.

According to an example, each of said rear wheels and/or the front wheel has a wheel structure comprising elements of high-strength steel sheet, symmetrically arranged on the two sides of a general median plane of the wheel and rigidly coupled to each other. The rim of the wheel is also made of high-strength steel, and includes a circumferential flange, radially internal, substantially flattened and contained in the median general plane of the wheel, and said elements of high-strength steel sheet have their radially outer portions rigidly connected to the two faces of said inner flange of the rim.

In a first example, two elements of high-strength steel sheet are provided, each formed in a single piece, with a central part and an outer circumferential part connected to each other by a plurality of spokes. In a second example, a plurality of separate pairs of substantially flattened elements are provided, facing each other and mutually connected to define the spokes of the wheel, which have their radially outer ends connected to the wheel rim, and their radially inner ends connected to the wheel hub. In another example, the wheel structure is slightly dome-shaped, in such a way that the wheel hub is displaced axially outwards with respect to the general plane of the wheel, to allow the rims of the two rear or front wheels to be kept closer together, while leaving sufficient space between the hubs of the two rear or front wheels to accommodate the transmission elements and the suspension arms.

### Main advantages of the invention

The vehicle according to the invention is characterized by:
- high ergonomics of use by means of high torques at each rotation speed of the pedals, without the need to change the transmission ratio; high driving stability thanks to the two independent shock-absorbing rear wheels (and possibly also to one or two front wheels, also independent and shock-absorbing),
- high "safety", in particular, against the risk of falling from a standstill, or moving on wet and icy roads, thanks to the two rear wheels and/or the two front wheels, to the braking assistance, to the passive on-board sensors, which inform the rider of the surrounding dangers, to the active coupling of the sensory systems with the motor, which allows intervention on the speed of the motor to reduce the risk of a fall or collision,
- high efficiency thanks to the limited weight of the tubular structure in high-resistance steel, thanks to light and robust wheels, in high-resistance steel, thanks to the fact that motors with large diameter rotors are used, for example, of the axial flux type, designed for low rotations and efficient at all the torques delivered, thanks to the fact that the transmission has no transverse components to the motion, thanks to the fact that for all configurations there is energy recovery in descent, and in every moment wherein the vehicle is in motion, but the rider does not pedal.

### Brief description of the figures

Further characteristics and advantages of the invention will become evident from the following description, with reference to the attached drawings, wherein:
Figure 1 is a perspective view of a first embodiment example of a vehicle according to the invention, in a long wheelbase cargo configuration, with rack-container box, with rear wheels more spaced apart (between 16 cm and 35 cm), and pedal crank assembly sufficiently spaced apart from the rear wheels to prevent interference between the pedal cranks and rear wheels,
Figure 2 is an additional perspective view of the vehicle of Figure 1, with the rack-container box removed,
Figure 3 is an additional perspective view of the vehicle of Figure 1, with the rack-container box removed,
Figure 4 is a plan view of the vehicle of Figure 1,

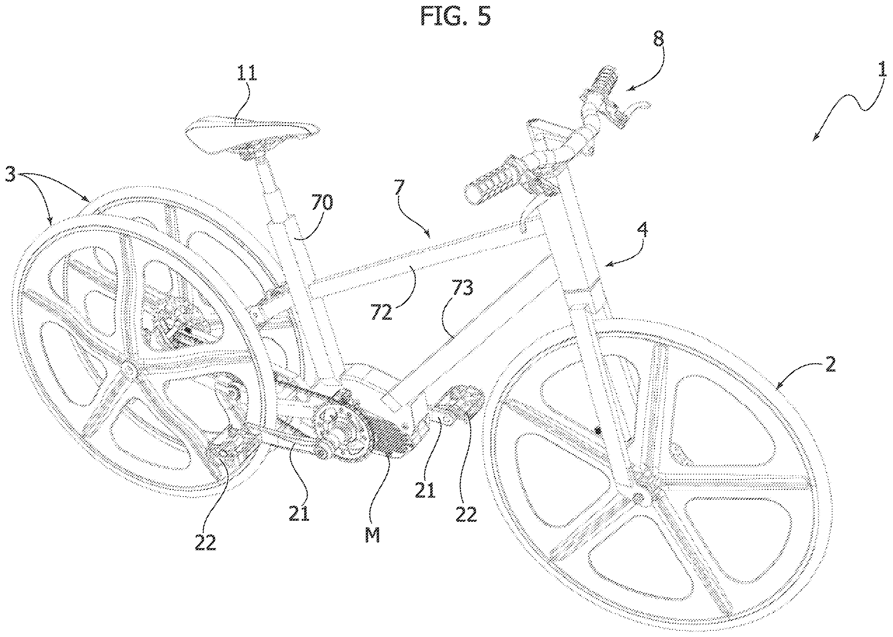

Figure 5 is a perspective view of a second embodiment example of a vehicle according to the invention, in a short wheelbase configuration, without rack-container box, with rear wheels closer to each other (between 10 cm and 16 cm) in such a way that the pedal cranks can rotate outside the two rear wheels, without interfering therewith; in this configuration, the hub of each wheel is axially displaced outwards with respect to the general plane of the wheel, to allow the rims of the two wheels to be kept closer together, while leaving sufficient space between the hubs of the two wheels to accommodate the transmission elements,
Figure 6 is a plan view of the vehicle of Figure 5,
Figure 7 is a perspective view on an enlarged scale of a detail of Figure 3, with some parts (including the two rear wheels) removed, for greater clarity of illustration,
Figure 8 is another view on an enlarged scale of a detail of Figure 6, with some parts removed,
Figure 9 is an additional perspective view of the detail of Figure 8,
Figure 10 is an additional perspective view of the detail of Figures 8, 9,
Figure 11 is a perspective view of the frame of the vehicle of Figures 1 and Figure 5,
Figure 11A is a perspective view of a configuration with two independent front wheels each equipped with its own suspension and braking system,
Figure 12 is a front view of a first example of a wheel usable in the vehicle according to the invention, the body of which consists of two shaped sheets of high-strength steel, facing each other and welded or glued or coupled in any way (for example, by means of screws), in order to form a highly robust lamellar structure resistant to side stresses,
Figure 13 is an exploded perspective view of the wheel of Figure 12, showing the two sheets constituting the wheel body and two cylindrical tubular central elements constituting the wheel hub and intended to receive the bearings for the rotatable support on the wheel support, and to carry additional elements, such as the disc brake disc and one or more pinions,
Figure 14 is a detail of Figure 13 on an enlarged scale,
Figure 15 is a perspective view of the wheel, in the assembled condition,
Figure 16 is a cross-sectional view of an example of the wheel rim,
Figure 17 is a perspective view of a second example, wherein the wheel comprises a plurality of separate spokes, each consisting of two sheets of high-strength steel, coupled together,
Figure 18 shows the detail of the connection of the inner ends of the spokes of Figure 17 with an inner ring of the wheel,
Figure 19 shows the detail of the mounting of the inner ring visible in Figure 18 on a cylindrical tubular body constituting the wheel hub,
Figure 20 shows an overall perspective view of the wheel in the aforesaid second example,
Figure 21 shows a perspective view of a third example of the wheel, wherein the wheel structure is slightly dome-shaped, in such a way that the wheel hub is displaced axially outwards with respect to the general plane of the wheel, to allow the rims of the two rear wheels to be kept closer together, while leaving sufficient space between the hubs of the two wheels to accommodate the transmission elements, as also illustrated in Figure 5.
Figure 22 is a cross-sectional perspective view of an axial flux electric motor usable in a vehicle according to the invention,
Figure 23 is a cross-sectional perspective view of a first example of application of an axial flow electric motor to the crank pedal assembly of the vehicle according to the invention,
Figures 24, 25 show two additional examples of application of an axial flux electric motor to the crank pedal assembly of the vehicle according to the invention,
Figure 26 illustrates an embodiment of the vehicle transmission according to the invention, using the arrangement of the axial flow electric motor that is illustrated in Figure 23,
Figure 27 illustrates an embodiment of the vehicle transmission according to the invention, using the arrangement of the axial flow electric motor that is illustrated in Figure 24,
Figure 28 is an enlarged scale view of a detail of the solution of Figure 27, showing a plate forming part of the vehicle frame, for mounting the axial flow electric motor,
Figure 29 is a variant of Figure 27, wherein a conventional gear shifting device is associated with the intermediate transmission shaft, with pinions and derailleur,
Figure 30 shows another embodiment example of the invention, wherein an axial flux electric motor is associated with the intermediate transmission shaft,
Figure 31 illustrates another embodiment, wherein a large diameter, low rotation speed axial flow electric motor is centrally located between the two rear wheels, and has opposite outlets connected to the rear wheels by means of axle shafts and homokinetic joints,
Figures 32 and 33 are partially cross-sectioned perspective views showing the configuration of a rack-container box used in an embodiment example of the vehicle according to the invention,
Figure 34 illustrates an example wherein the luggage container is equipped with a thermal conditioning system, in order to allow the transport of hot or cold food,
Figure 35 illustrates an example of the overall electrical-electronic architecture of the vehicle according to the invention.
Figure 36 illustrates a detail of Figure 35,
Figure 37 illustrates an additional detail of Figure 35,
Figure 38 illustrates an additional detail of Figure 35 relating to a remote data communication system, with a GPS-GMS system integrated in a gateway,
Figure 39 illustrates an additional detail of Figure 35 relating to the power supply mode of the battery pack by means of photovoltaic cells, wherein said cells are also used for actively balancing the sub-modules of the battery pack, according to a method proposed by the Applicant in his patent applications IT 102021000010370 and IT 102021000010373, still secret at the priority date of this application, and
Figures 40, 41 illustrate additional operating conditions of the system of Figure 35.

### Detailed description of preferred embodiments of the invention

In the drawings, reference 1 indicates - in its entirety - a ride-on vehicle, in particular a tricycle, including a front wheel 2 and two rear wheels 3.

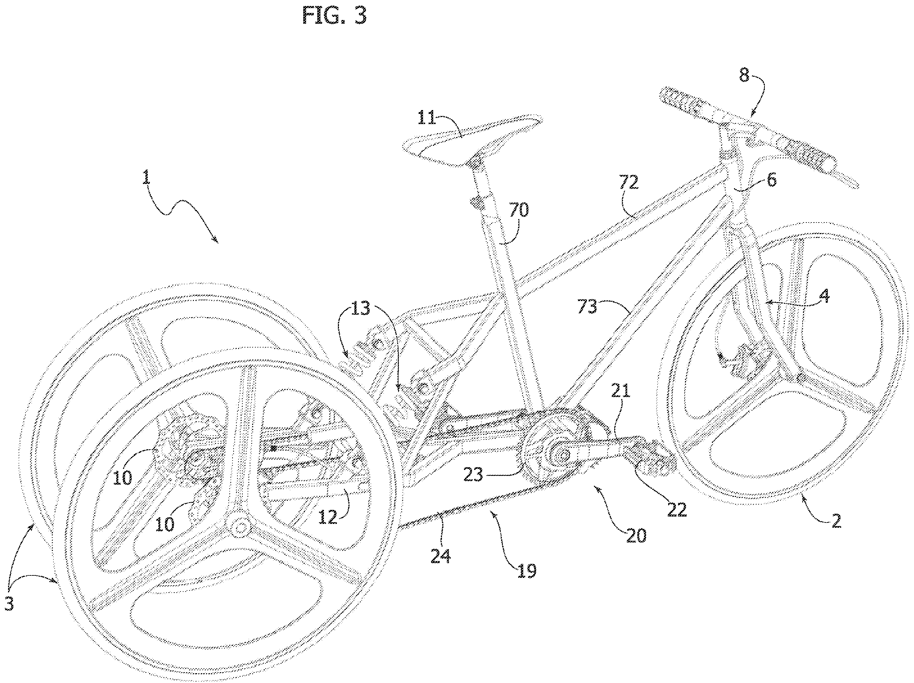

According to a conventional technique, the front wheel 2 is rotatably supported by the end portions of two arms of a front fork 4, which may include suspension elements (not present in the illustrated example), and which is connected to a steering shaft 5 rotatably supported by a pipe 6 of a tubular frame 7 of the vehicle 1. Still according to the conventional technique, the steering shaft 5 is joined to a handlebar 8, which is also associated, in a conventional manner, with the operating members of a speed change device with which the vehicle is provided, with a disc brake 9 associated with the front wheel and two disc brakes 10 (Figure 3, where the two discs are visible) associated with the rear wheels 3. An HMI (human-machine interface) including a display may be associated with the handlebar 8. The braking system may be implemented by means of a conventional system with flexible metal cables, or by an electro-hydraulic system, in analogy to braking systems for motor-vehicles, therefore, with an integrated motorized ABS or mechanical pneumatic system.

The structure of the front wheel 2 and of the rear wheels 3 that is illustrated in the drawings is provided purely by way of non-limiting example. Below, examples of a wheel that can be advantageously used in the vehicle of the invention will be illustrated. In any case, said examples can also be applied using any known type of wheel structure, for example, conventional spoked wheels or wheels of plastic material or composite material with a spoke structure or lenticular structure.

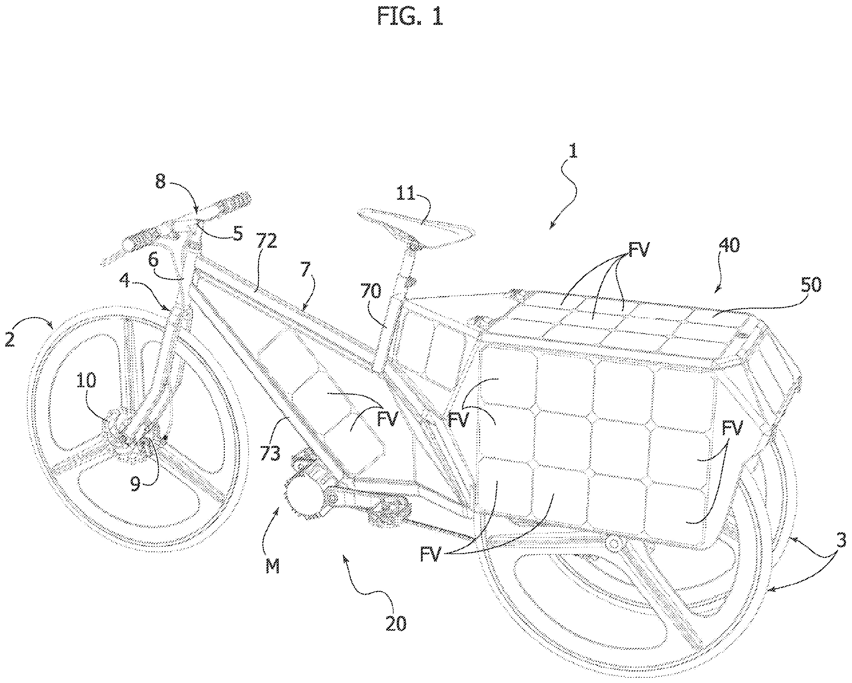

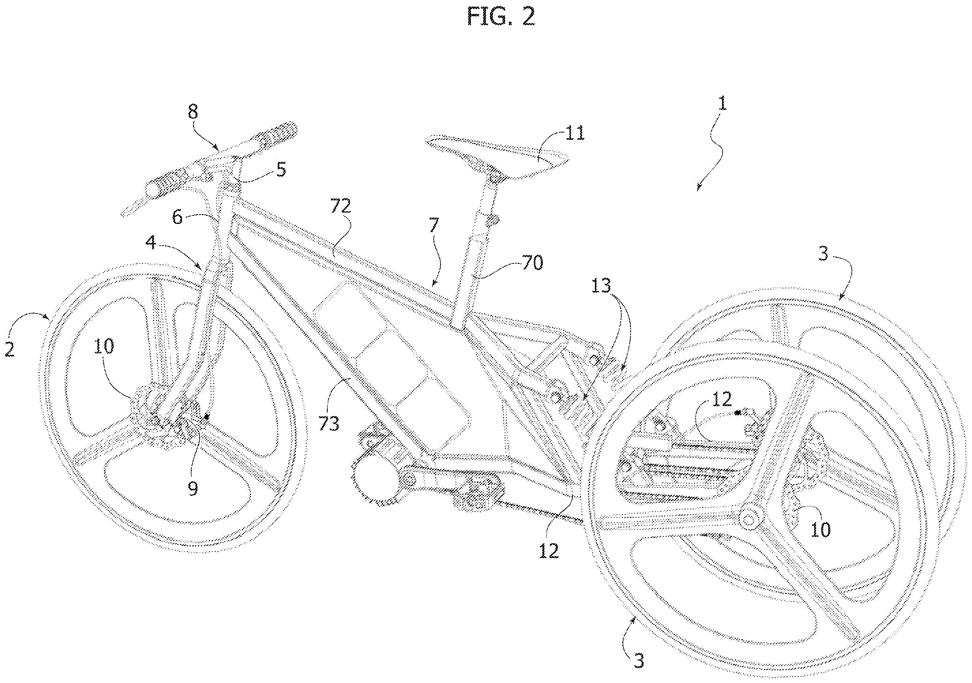

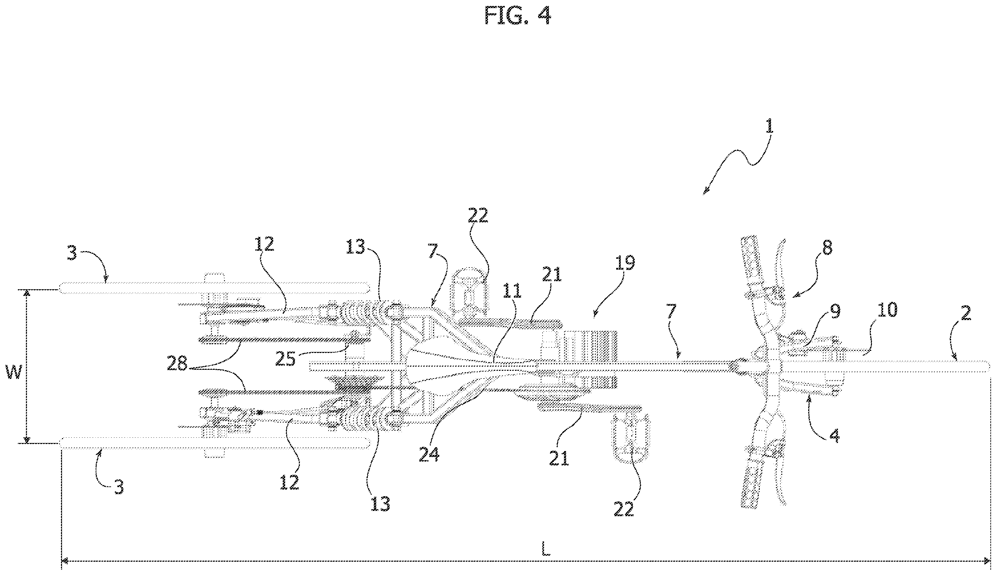

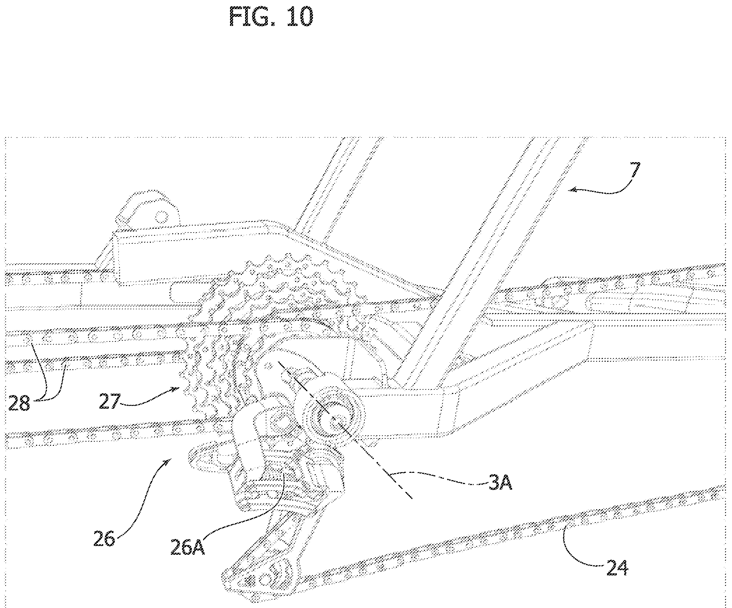

Figures 1-4 and 7-11 refer to a first embodiment of the vehicle of the invention, in a long wheelbase cargo configuration, with rack-container box, with rear wheels more spaced apart (between 16 cm and 35 cm) and pedal crank assembly sufficiently spaced apart from the rear wheels to prevent interference between the pedal cranks and rear wheels, With reference to Figure 4, in a concrete example of this first embodiment, the overall length L of the vehicle, including wheels of 27 inches, is 2074 mm, and the distance W between the rear wheels is 30 cm.

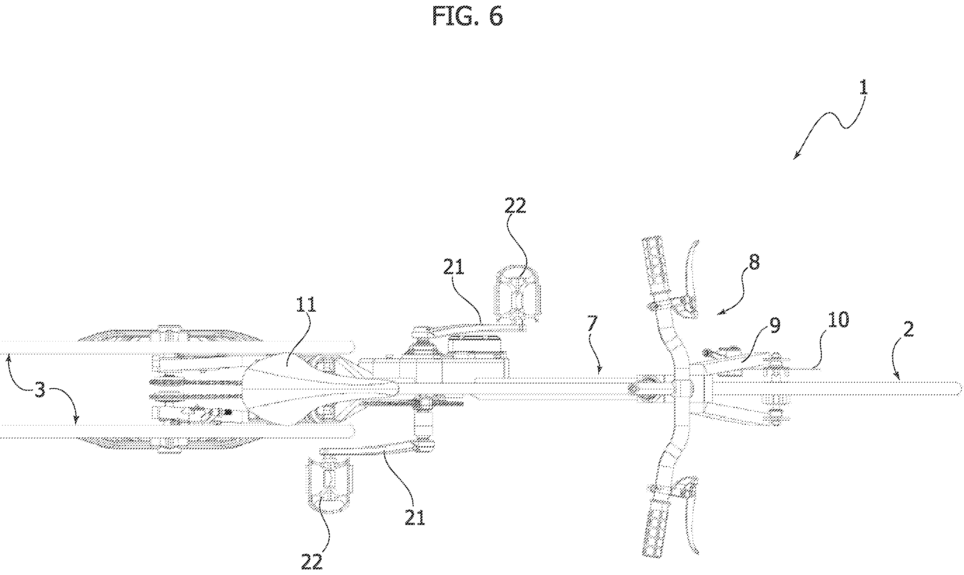

Figures 5, 6 refer to a second embodiment of the vehicle of the invention, in a short wheelbase configuration, without rack-container box, with rear wheels closer to each other (between 10 cm and 16 cm) in such a way that the pedal cranks can rotate outside the two rear wheels, without interfering therewith; in this configuration, the hub of each wheel is axially displaced outwards with respect to the general plane of the wheel, to allow the rims of the two wheels to be kept closer together, while leaving sufficient space between the hubs of the two wheels to accommodate the transmission elements, With reference to Figure 6, in a concrete example of this first embodiment, the overall length L of the vehicle, including wheels of 27 inches, is 1750 mm and the distance W between the rear wheels is 13 cm.

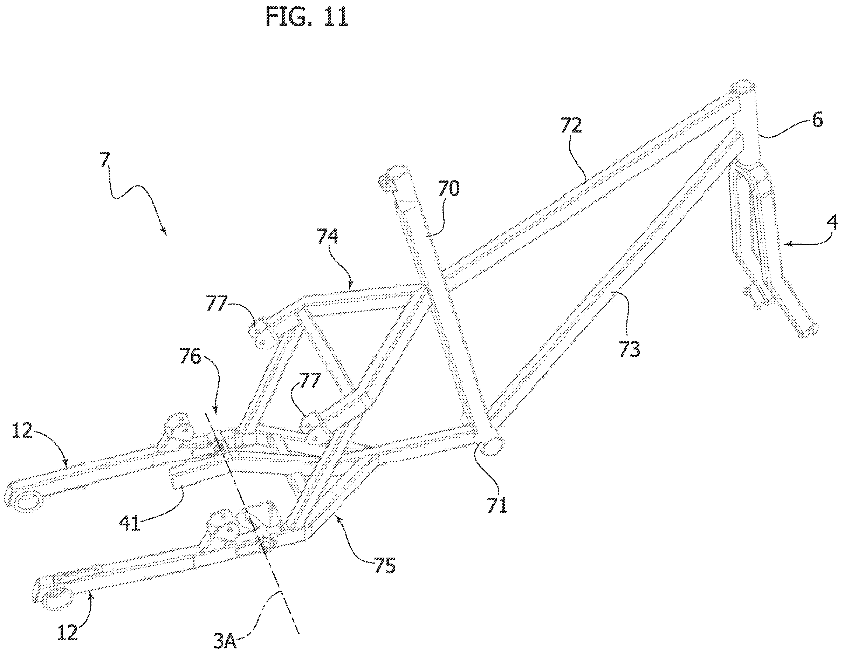

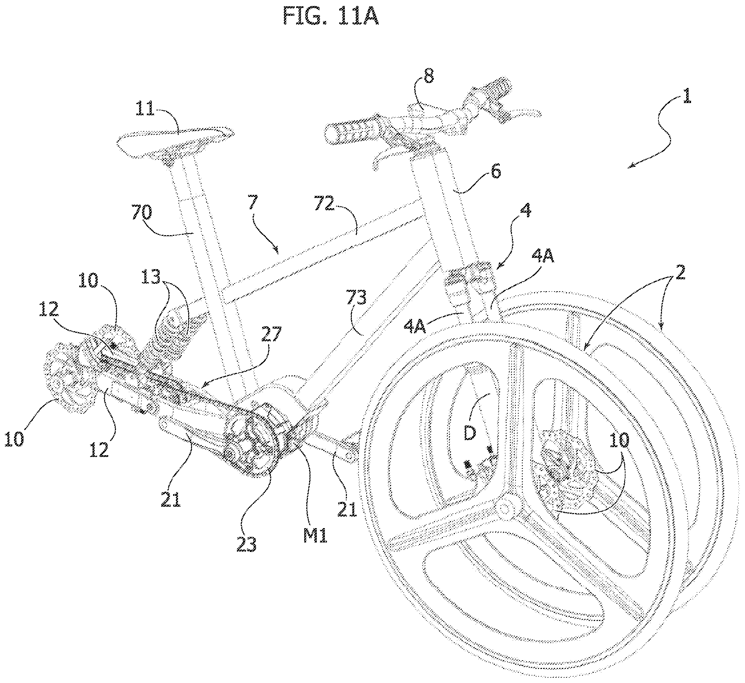

With reference to the embodiment of Figures 1-4 and 7-11, and in particular with reference to Figure 11, in the case of the example illustrated here, the frame 7 includes a saddle-holder tube 70, having an upper end provided with a conventional cylindrical or preferably quadrangular attachment for a support tube of a saddle 11 (Figures 1-3). The lower end of the saddle-holder 70 is provided with an attachment 71 for supporting a pedal crank assembly, in the way that will be described in detail below. The saddle-holder tube 70 is connected to the pipe 6 which rotates the steering shaft and the front fork 4 by an upper longitudinal tube 72 and a lower longitudinal tube 73, which in the illustrated example are tubes with a quadrangular cross-section.

In a preferred example, the tubes of the frame 7 are of high-strength "Dual Phase" steel of the type DP800, DP1000, D1500, cut and welded together according to the method described by the Applicant in the document WO2018065946A1.

At the rear of the saddle-holder tube 70, the frame 7 includes a rear reticular structure 74 also made up of tubes with a quadrangular cross-section and/or with a variable cross-section. In the illustrated example, the reticular structure 74 includes a lower rear fork 75 with two arms whose rear ends constitute respective supports 76 for articulation to the frame 7 of two longitudinal arms 12 whose rear ends support the two rear wheels 3 in rotation.

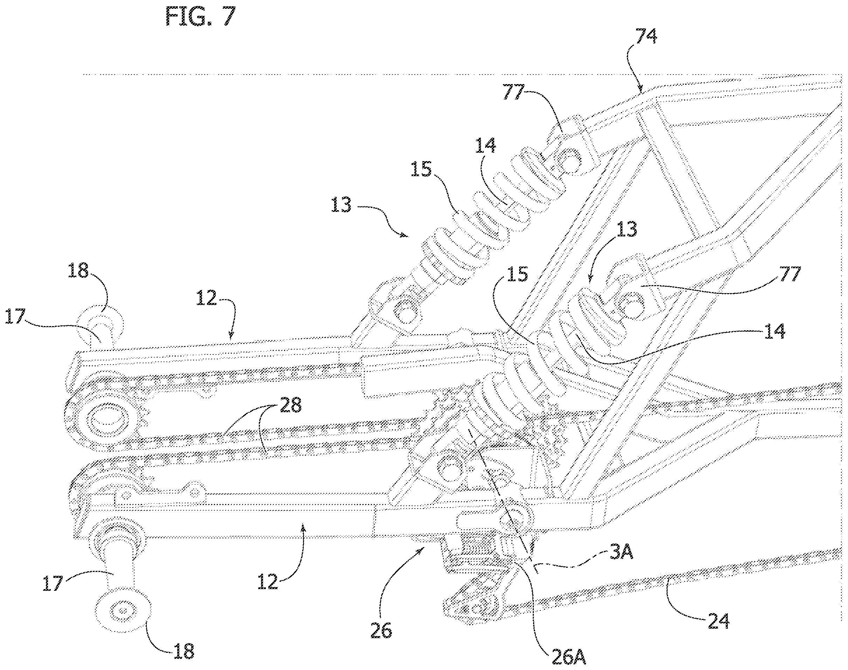

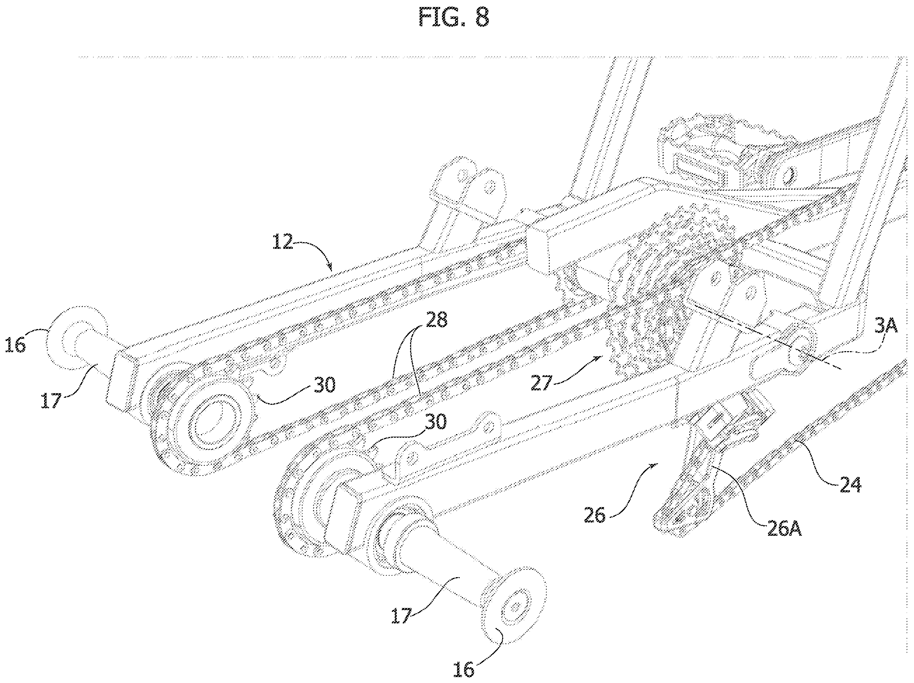

Again with reference to Figure 11, the upper rear fork 74 ends with two attachments 77 for two elastic assemblies 13 (see in particular Figure 4). In the illustrated example, each elastic assembly 13 comprises a shock absorber cylinder 14 around which a helical spring 15 is arranged. Each spring-shock absorber assembly has an upper end connected to its respective attachment 77 carried by the rear end of an upper rear fork arm 74. The lower end of each spring-shock absorber assembly 13 is, instead, connected in an articulated manner to an attachment 16 carried by the respective longitudinal arm 12. The use of pneumatic or hydraulic shock absorbers, without the use of springs, is not excluded, with the advantage of compactness. The tilt of the assemblies 13 may be any, including a vertical arrangement. With reference - in particular - to Figures 7, 8, the rear ends of the two longitudinal arms 12 rotatably support respective shafts 17 connected in rotation with the hubs 18 of the two rear wheels 3.

Thanks to the arrangement described above, each rear wheel 3, carried by a respective longitudinal arm 12, may perform oscillations independently of the other rear wheel corresponding to an oscillation of the respective longitudinal arm 12 around the common articulation axis of the two longitudinal arms 12 to the frame 7. This axis is indicated in the drawings by 3A and is directed transversely with respect to the vertical longitudinal plane of the vehicle.

The traction to the rear wheels 3 is transmitted, by means of a transmission system indicated - in its entirety - by 19, from a pedal crank assembly 20. The pedal crank assembly 20 includes two pedal cranks 21 with which respective pedals 22 are associated. According to the prior art, the two pedal cranks 21 are capable of transmitting a rotation to an outlet wheel of the pedal crank assembly 20, which in the case of the examples illustrated here consists of a front crown gear 23 meshing with a front transmission chain 24. According to the invention, a transmission system can be provided, which includes a toothed belt transmission instead of the chain transmission. According to a further example not illustrated, two crown gears can be provided on opposite sides of the pedal crank assembly connected independently to the rear wheel hubs by means of two respective transmissions of the type that will be illustrated below with reference to a single crown gear 23.

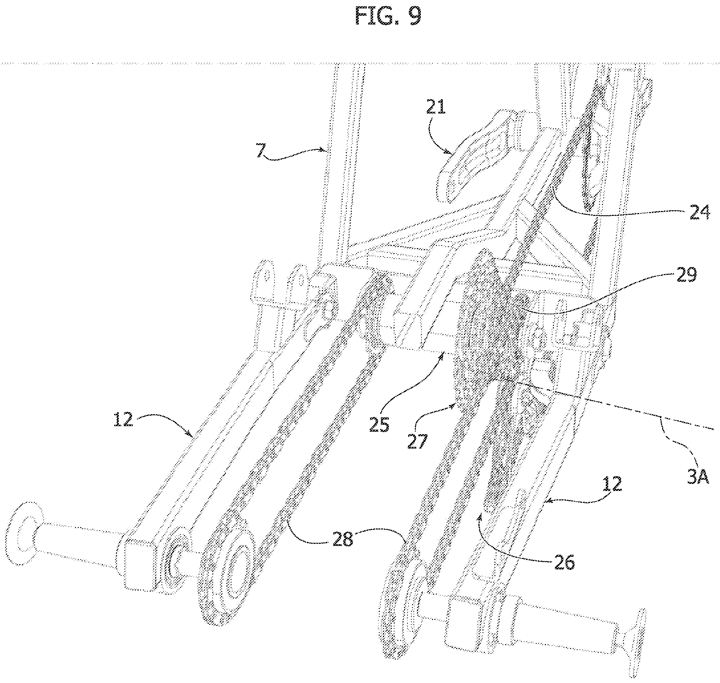

With reference to Figure 9, the frame 7 of the vehicle supports an intermediate transmission shaft 25 in rotation about the pivoting axis 3A of the longitudinal arms 12. The transmission system 19 includes the aforementioned front transmission chain 24, which connects the outlet wheel of the crank pedal assembly 20 with the intermediate transmission shaft 25.

In the example shown in the figures, a speed change device 26 is associated with the intermediate shaft 25. This gear change device can be made in any known way. In the case of the solution illustrated in the drawings, the device 26 includes a pack of pinions 27 rigidly mounted on the intermediate transmission shaft 25 and a derailleur device 26A for selectively engaging the front transmission chain 24 on only one of the pinions of the pack pf pinions 27.

The transmission system 19 also comprises two additional transmission chains or belts that connect the intermediate transmission shaft 25 with the two rear wheels 3. In the case of the illustrated example, two rear transmission chains 28 are provided, which engage respective pinions 29 rigidly connected to the intermediate transmission shaft 25. At the opposite end, the two transmission chains 28 (see Figures 7, 8) engage respective pinions 30 rigidly connected to end portions of the shafts 17, which extend into the space between the two longitudinal arms 12. Since the axis of the intermediate transmission shaft 25 coincides with the pivoting axis 3A of the longitudinal arms 12, the pivoting of the longitudinal arms 12 during travel does not alter the transmission of rotation from the intermediate transmission shaft 25 to the two rear wheels 3, by means of the rear transmission chains 28. Instead of the rear transmission chains 28 and the respective pinions, transmission belts (in particular toothed belts) could be used in engagement with pulley gears.

Figure 11A shows an embodiment with two front wheels 2, each carried by a respective arm 4A of the front fork 4. Each front wheel 2 is associated with a respective suspension (in the example a respective shock absorber D) and a respective braking system (in the example, a respective disc brake, with caliper carried by the arm 4A and disc 10 carried by the wheel pin). The two front wheels are placed at a distance preferably in an interval between 14 cm and 20 cm, sufficient to allow stability and ergonomics in all driving conditions, without requiring the mechanical complexity that would be necessary for greater distances.

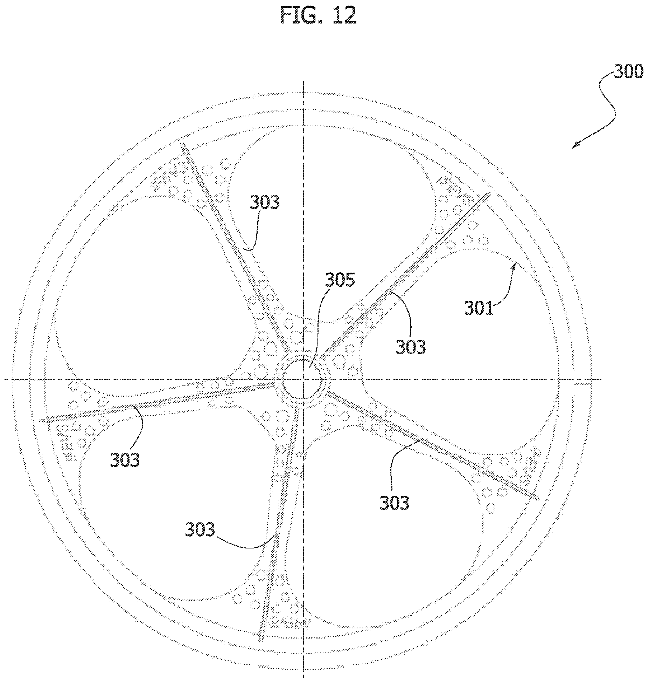

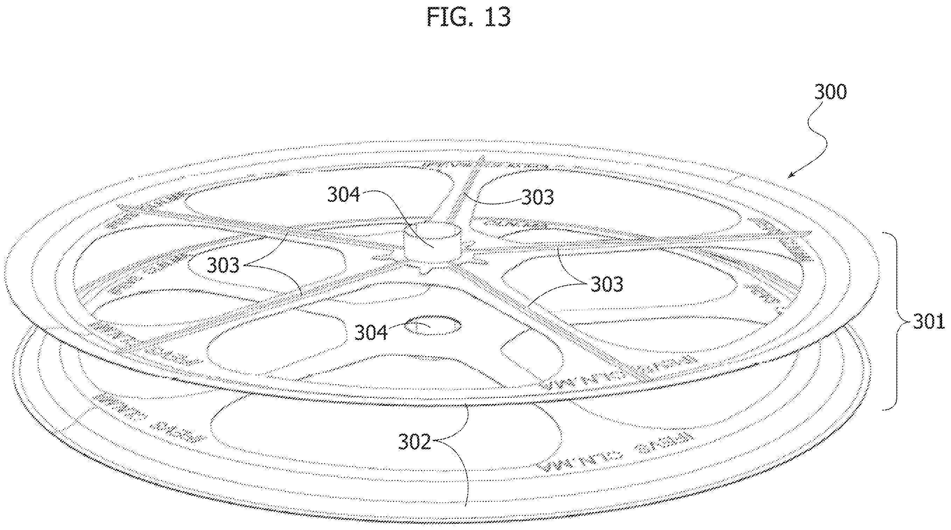

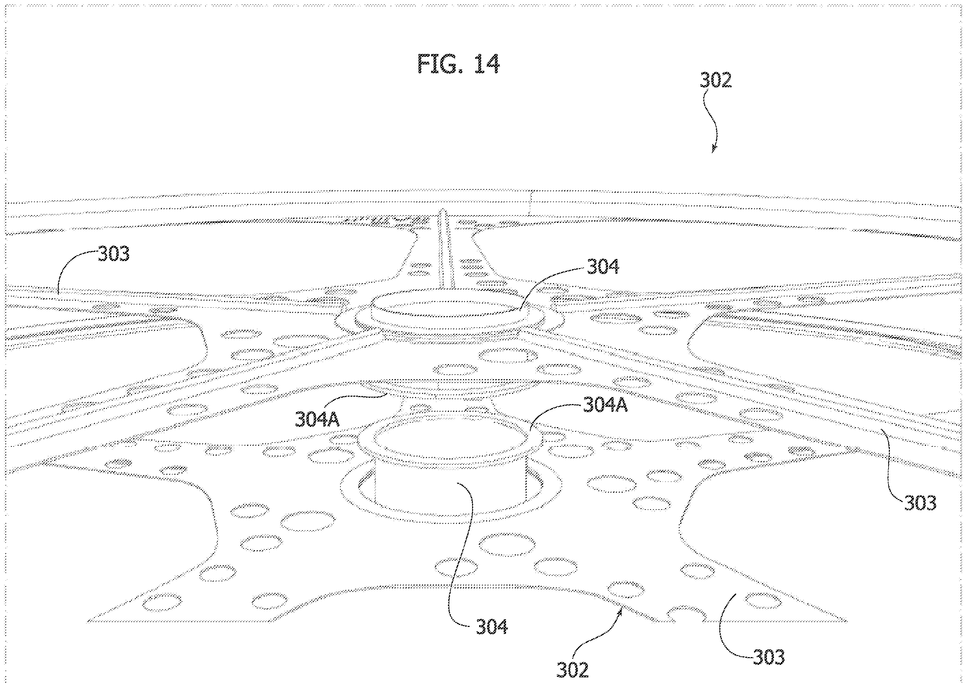

Figure 12 is a front view of a first example of a wheel 300, usable in the vehicle according to the invention, for each of the rear wheels and/or for the front wheel. The body 301 of the wheel 300 consists of two shaped sheets of high-strength steel 302 (see Figures 13, 14), facing each other and welded or glued or coupled in any way (for example, by means of screws), in order to form a highly robust lamellar structure resistant to side stresses,

High-strength steels are a class of special steels characterized by exceptional toughness and resistance to yield. High-strength steel sheets may have a lower thickness, with the same performance, than standard steel sheets, with consequent weight saving. Thanks to this arrangement, the wheel of the vehicle according to the invention may have characteristics of lightness equal to those of a racing bicycle wheel, including wheels in composite material, but with the advantage of a drastically reduced production cost.

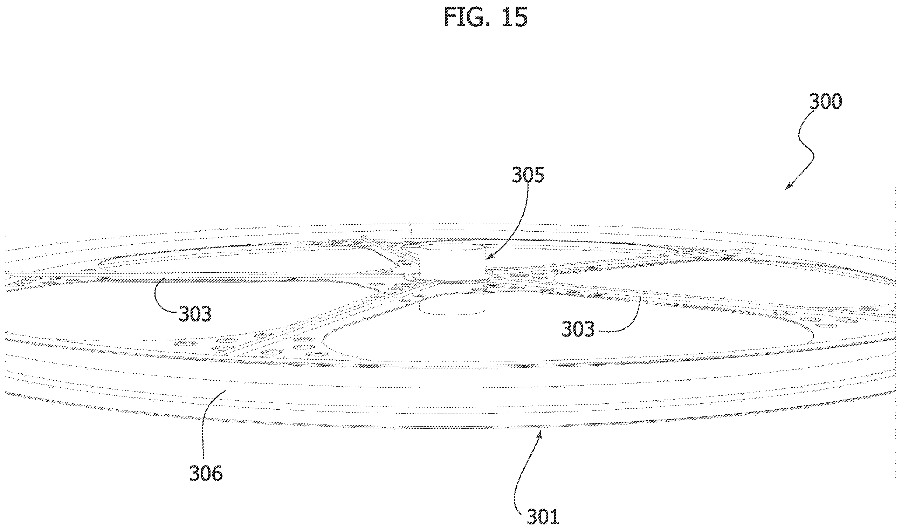

In the example illustrated in Figures 12-15, the two sheet metal elements are each in a single piece, obtained for example by laser cutting or printing, and are shaped in such a way as to present a plurality of spokes 303, which join an outer peripheral ring to a central ring. The central rings of the two sheet metal elements 302 are mounted on two respective cylindrical tubular elements 304 having end flanges 304A joined together (for example, by welding or gluing), so as to constitute the hub 305 of the wheel (Figure 15), intended to receive the bearings for the rotatable support on the wheel pin, and to carry additional elements, such as the disc of the disc brake and one or more pinions. Figure 15 is a perspective view of the wheel in the assembled condition, with the central parts of the two sheet metal elements 302 in contact with the respective flanges 304A (Figure 14) of the two tubular members 304 forming the hub 305.

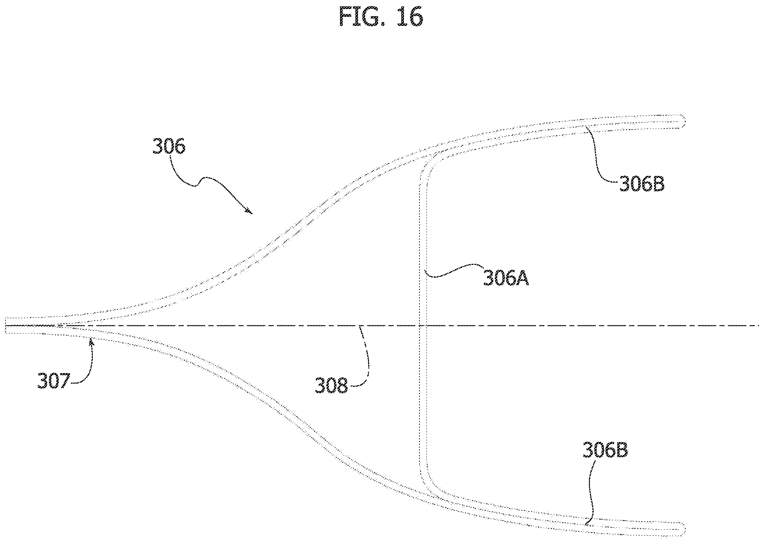

Figure 16 is a cross-sectional view of an example of the wheel 300 rim 306. The rim 306 is made in a single piece of high-strength steel, for example, by cold or hot deformation of a tubular member drawn or obtained from a high-strength steel sheet. In the example of Figure 16, the rim 306 comprises a radially outer wall 306A from which two circumferential flanges 306B protrude, which define the part intended to accommodate the tire. On the radially inner side, the rim wall defines a flattened flange 307 arranged in the median general plane 308 of the wheel. The radially outer portions of the two sheet metal elements 302 that define the wheel body are welded or glued or connected by means of coupling means of any known type, to the two opposite faces of the flange 307.

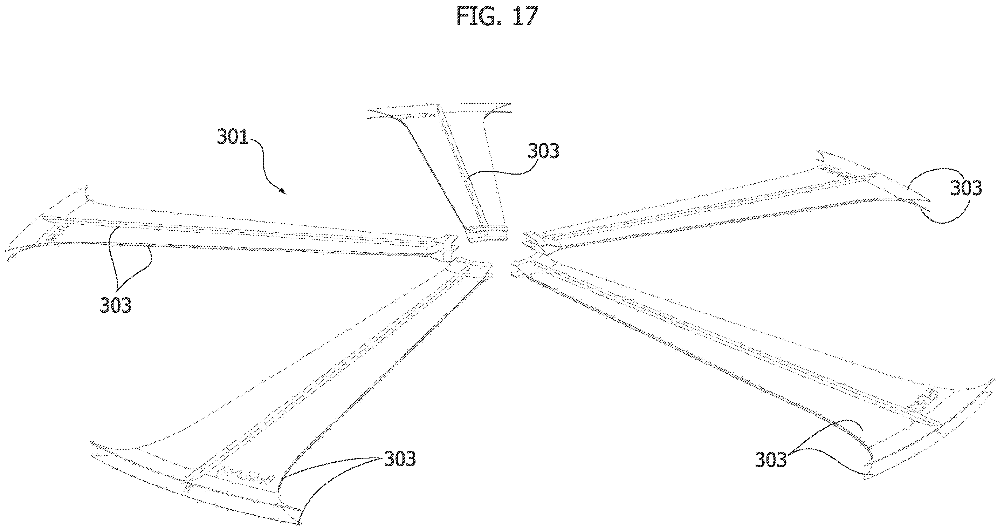

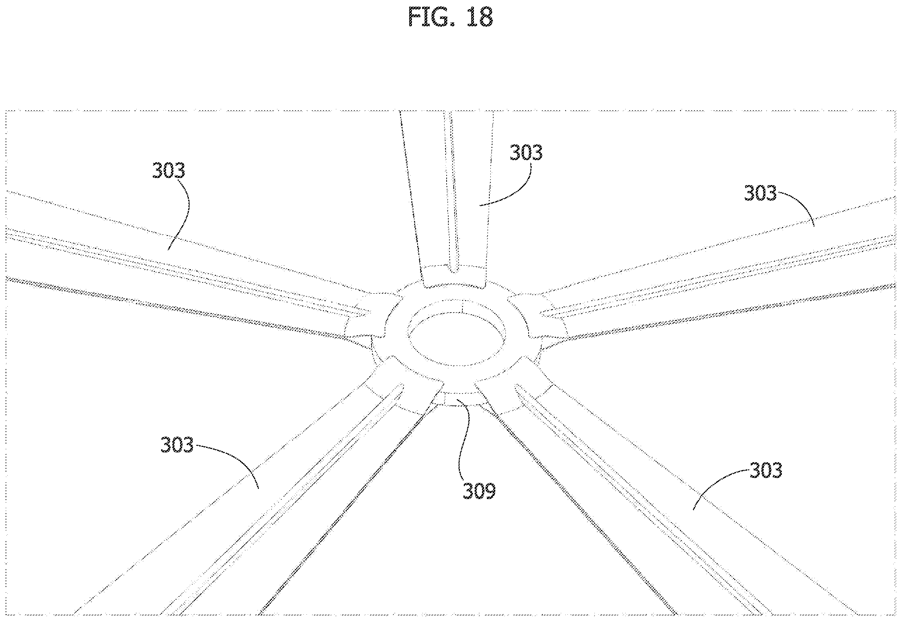

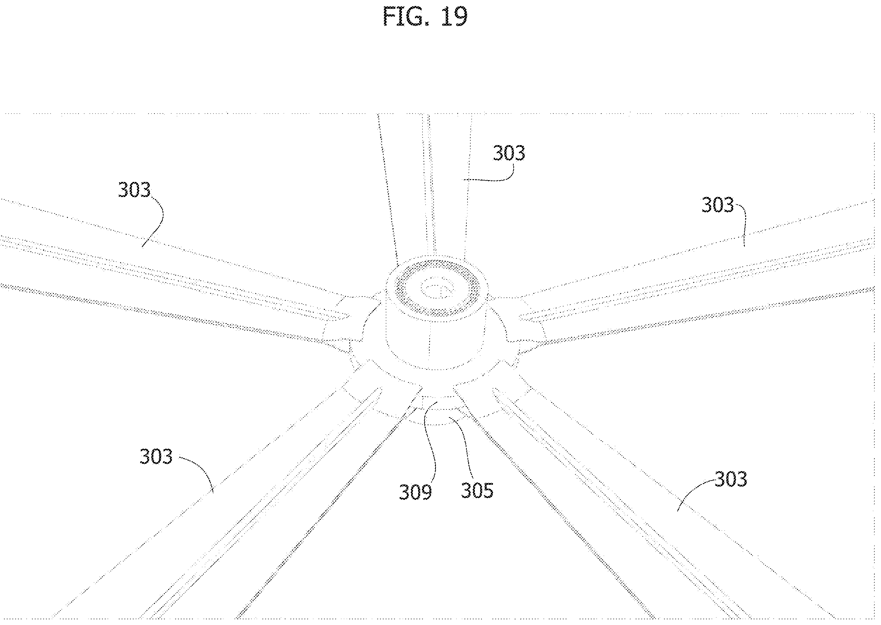

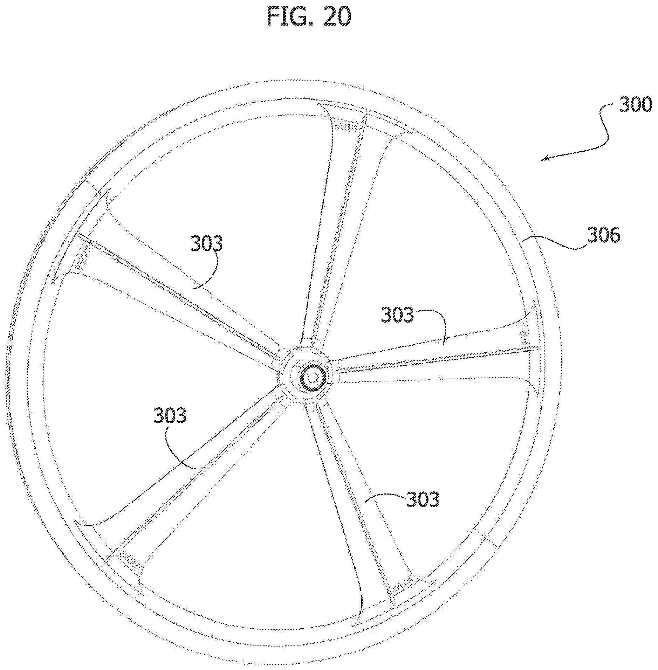

Figure 17 is a perspective view of a second example, wherein the wheel comprises a plurality of separate spokes 303, each consisting of two sheets of high-strength steel, coupled together. Figure 18 shows the detail of the connection of the inner ends of the spokes of Figure 17 with an inner ring 309 of the wheel. Figure 19 shows the detail of the mounting of the inner ring 309 on a cylindrical tubular body 305 constituting the wheel hub. The elements 309 and 305 may preferably be integrated in a single element. Figure 20 shows an overall perspective view of the wheel 300 in the aforesaid second embodiment. The rim 306 may be obtained starting from a flat strip of sheet metal or, preferably, from a flat circular crown. The profile of the rim 306 may vary in width and shape to accommodate international tire standards.

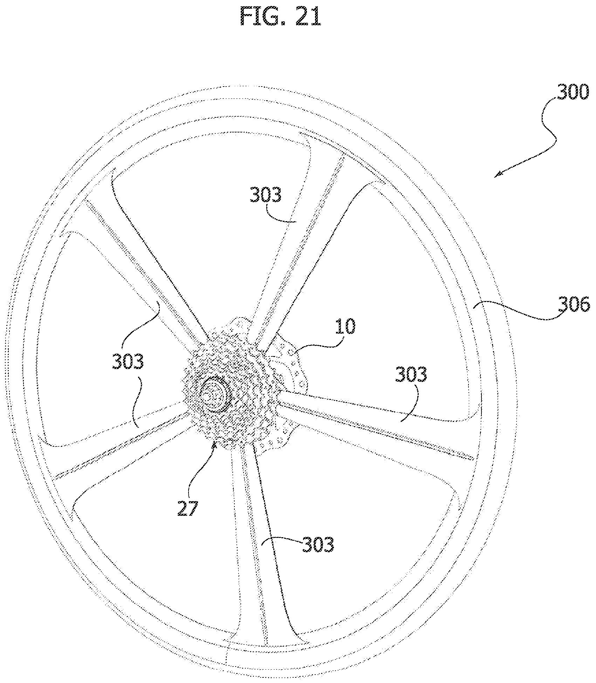

Figure 21 shows a perspective view of a third example of the wheel, wherein the wheel structure is slightly dome-shaped, in such a way that the wheel hub is displaced axially outwards with respect to the general plane of the wheel, to allow the rims of the two rear or front wheels to be kept closer together, while leaving sufficient space between the hubs of the two wheels to accommodate the transmission elements in the case of the rear wheels, as illustrated in Figure 5.

In all the aforesaid examples of the wheel 300, the wheel has a structure highly resistant to longitudinal and lateral stresses.
The use of shaped elements facing each other and joined together in pairs to create the spokes of the wheel allows stiffening of the overall structure with respect to lateral stresses and to simplify the construction of the entire wheel, avoiding waste of material.

The aesthetic appearance of the wheel can be varied at will by varying the configuration-shape and the number of spokes. The spokes can be customized with laser or printed lettering or logos.

In the preferred examples, the high-strength steel sheets are of Dual Phase material, preferably between DP1000 and D1500, and have a thickness between 0.3 mm and 0.5 mm.

Figures 1-3 show an embodiment example wherein an electric motor M of any known type for pedaling assistance is associated with the pedal crank assembly 20. According to a technique which is also known per se, a housing (not shown) for a rechargeable electric battery, for powering the electric motor M is associated with the frame 7 of the vehicle.

In the preferred embodiment of the invention, however, the vehicle provides pedaling assistance through the use of an axial flux electric motor or -more generally - equipped with a large diameter rotor in order to define a high torque value, which - as known - is a function that increases with the square of the rotor radius.

Axial flux electric motors are known in the art. In electric motors of this type, one or more rotors carrying permanent magnets cooperate with one or more stators carrying the windings to create the rotating magnetic field. The advantage of these motors is that they are capable of delivering relatively high torques with relatively low energy consumption. The torque delivered increases with the square of the motor radius, which allows significant benefits. High torque values can, therefore, also be obtained with shallow motors without magnets, but with large diameter rotors.

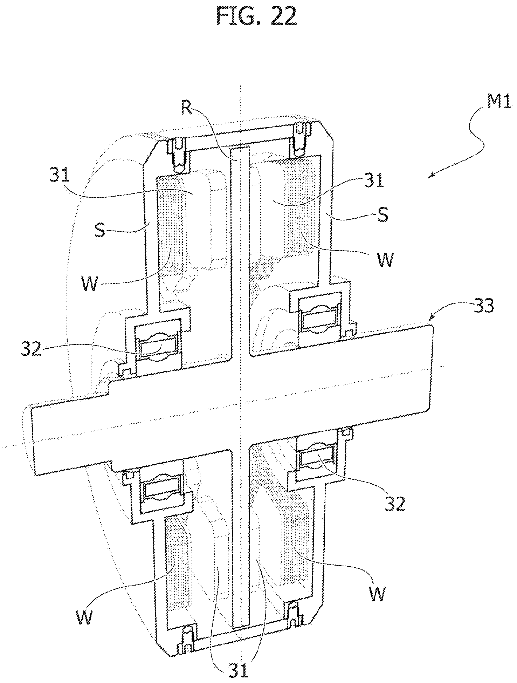

Figure 22 of the attached drawings shows a first example of an axial flux electric motor usable in the vehicle according to the invention. There can be any number of rotors and stators of the axial flux electric motor. However, the example of Figure 9 refers to an axial flux electric motor, indicated - in its entirety - by M1, which comprises a rotor ring R arranged between two stator rings S. The two stator rings S carry windings W cooperating with permanent magnets 31 facing them, carried by the two opposite faces of the rotor ring R. The two stator rings S support in rotation, by means of bearings 32, a crankshaft 33 whose ends protrude from the casing 34 of the motor M1, on to which the pedal cranks 21 are mounted.

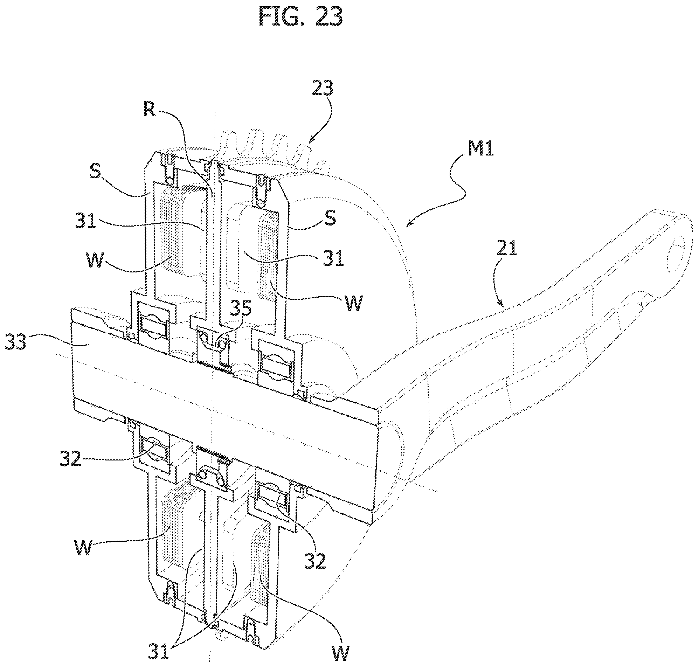

Figure 23 shows a first example of application of an axial flux electric motor or - more generally - of a shallow motor (in the axial direction) but equipped with a large diameter rotor of the type illustrated in Figure 22 to the vehicle according to the invention, wherein the motor is associated with the pedal crank assembly. In this example, the rotor ring R defines a crown gear 23, constituting the outlet wheel of the pedal crank assembly 20, meshing with the front transmission chain 24. Furthermore, between the rotor ring R and the shaft 33 a free wheel 35 is mounted, configured in such a way as to allow the transmission of torque only from the pedal cranks 21 to the outlet wheel 23 and not vice versa, so that the outlet wheel 23 is able to rotate permanently with the rear wheels 3 of the vehicle, due to the effect of the transmission system 19, while the pedal cranks 21 may also remain stationary or rotate in the opposite direction to the direction corresponding to the advancement of the vehicle. Therefore, compared to conventional bicycles, which provide a free wheel on the rear wheel hub, in the case of the vehicle according to the invention, the free wheel may only be associated with the axis of the pedal cranks.

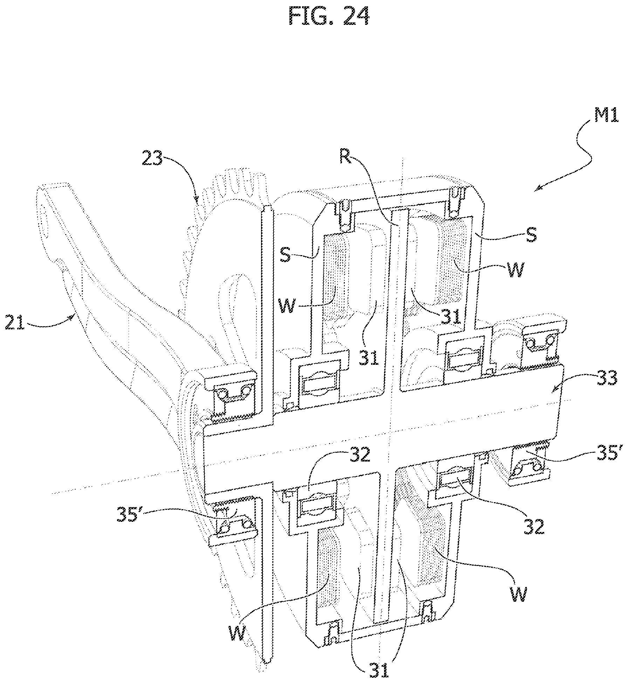

Figure 24 illustrates a variant of Figure 23 wherein the rotor ring R is rigidly connected to the shaft 33, while each of the two pedal cranks 21 is mounted on a respective end of the shaft 33 by interposition of a respective free wheel 35'.

In the example of Figure 24, the crown gear 23 is positioned outside the motor unit M1, although it would still be possible to position the crown gear 23 on a peripheral edge of the rotor R protruding outside the motor, as in Figure 23.

In any case, in this embodiment the crown gear 23 is rigidly connected to the crankshaft 33, which is therefore rigidly connected to the rear wheels, and may thus recover energy during decelerations, braking or descents.

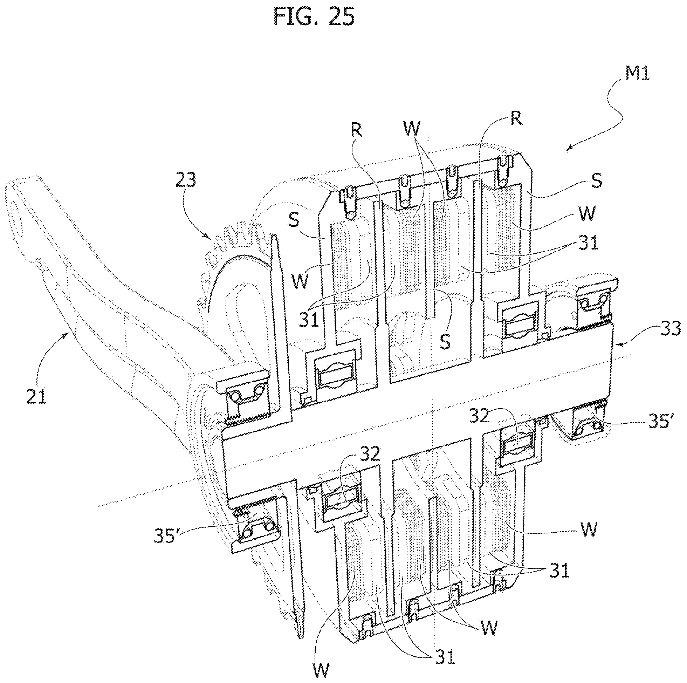

Figure 25 illustrates a variant of Figure 24 with a multistage axial flux motor, with two rotors interposed between three stators.

In the configurations described in Figures 22-25, the axial flux motor with large diameter (for example, 180 mm-220 mm) and low rotation speed (for example, with a maximum rotation of 250 rpm) may deliver the necessary torque at the required speed without the gear change device. In particular, it may deliver a very high peak torque up to 200 Nm between zero and 10 rpm without the use of torque multiplier gears inserted into the motor. In the range between 30 rpm and 70 rpm, it can deliver peak torques between 100 Nm and 150 Nm, making it ergonomic to drive the vehicle even in conditions of high slope roads. In this case, a single front crown on the motor and a single crown on the intermediate shaft operate between the motor and the intermediate transmission shaft with a defined ratio. A single gear can be selected that allows speeds of between 0 and 30 km/h to be reached for all road gradients by limiting the number of turns required. That is to say an ergonomic condition for all ages; it is known that elderly people have difficulty in sustaining pedaling frequencies above 50 rpm. The rotation speed of the motor and the selection of the torque to be delivered take place automatically in the motor based on the speed and torque sensors integrated therein according to solutions known in the state of the art. The torque delivered by the motor depends on the pressure exerted on the pedals.

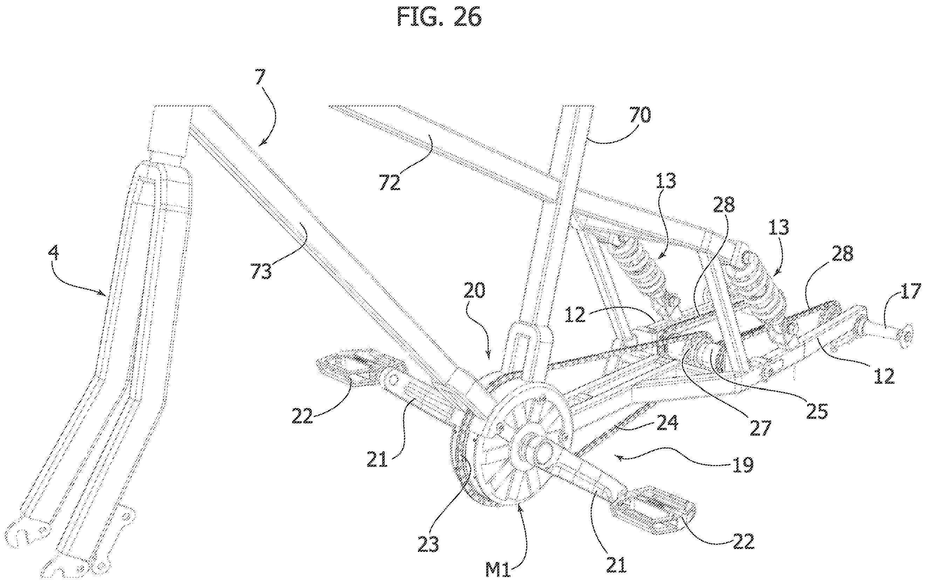

Figure 26 illustrates the transmission system 19 in the case of the example of Figure 23. The crown gear 23, protruding outside the casing of the motor unit M1, is arranged in the median longitudinal plane of the vehicle. The front transmission chain 24 engages a single pinion 27 on the intermediate transmission shaft 25, since a speed change is not envisaged. The chain 24 and the pinion 27 are aligned with the crown gear 23 in the median longitudinal plane of the vehicle.

The frame 7 includes an arch-shaped plate 71A at the confluence of the arms 70 and 73, for supporting the motor unit M1 integrating the pedal crank assembly.

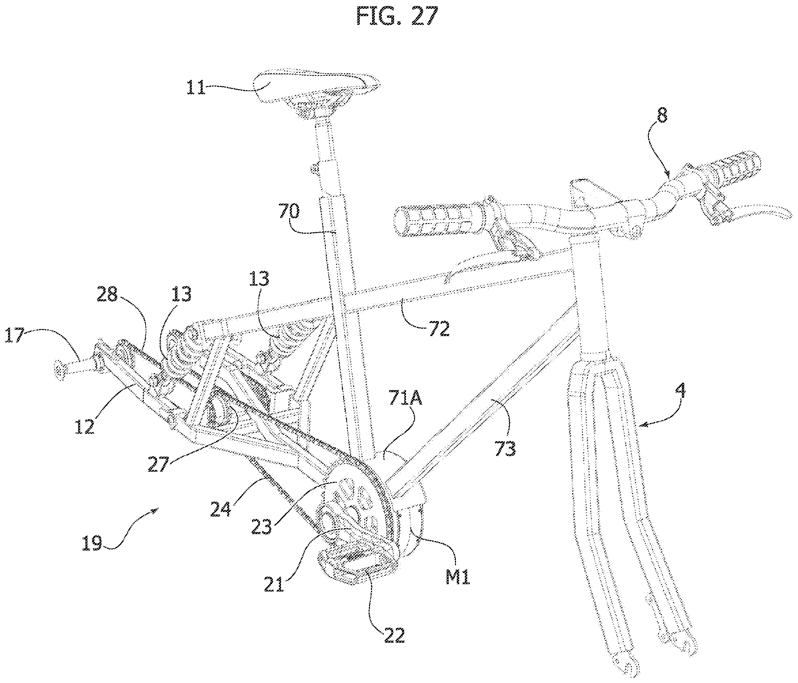

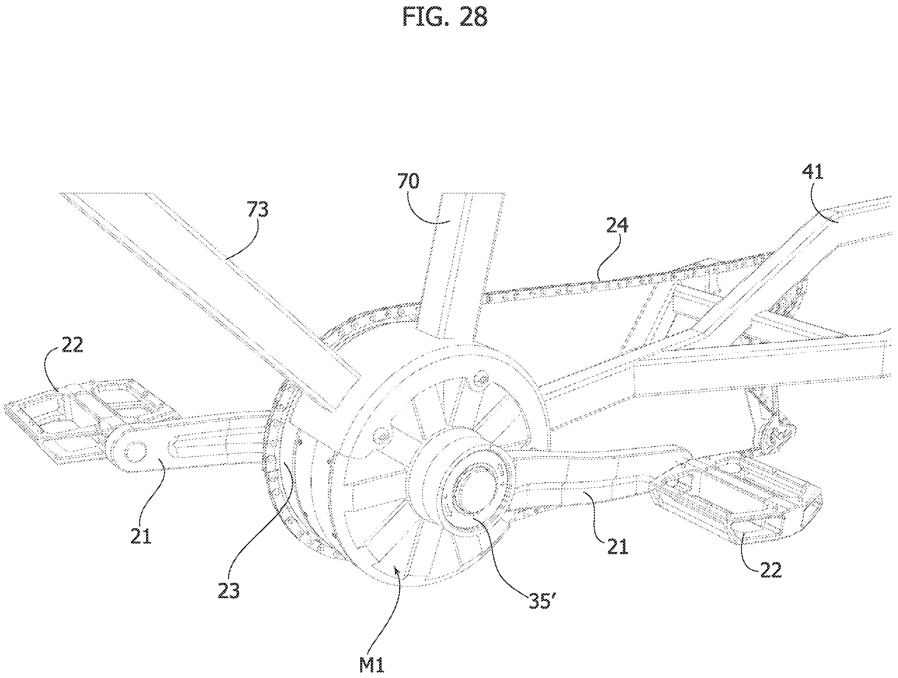

Figure 27 illustrates the transmission system 19 in the case of the example of Figure 24. Figure 28 illustrates a detail of the solution of Figure 27 on an enlarged scale,

In an arrangement similar to that shown in Figure 27, as an alternative to an axial flux electric motor with low rotation speed and high torque, a high speed transverse or radial flux electric motor unit can be used (for example, 1200 rpm - 4500 rpm) with an integrated planetary gear change device or a gear change device with discrete ratios to ensure the necessary torque. In this case, the complexity of the transmission is transferred to the motor block while on the outside of the motor casing there is only one front crown gear 23 on the motor and a single crown gear on the intermediate shaft 25, having defined diameters. The transmission ratio is selected automatically in the motor unit based on torque and speed sensors integrated therein. Also in this case, energy recovery during decelerations, braking or descents may be ensured by positioning the free wheels between the pedals and the crankshaft.

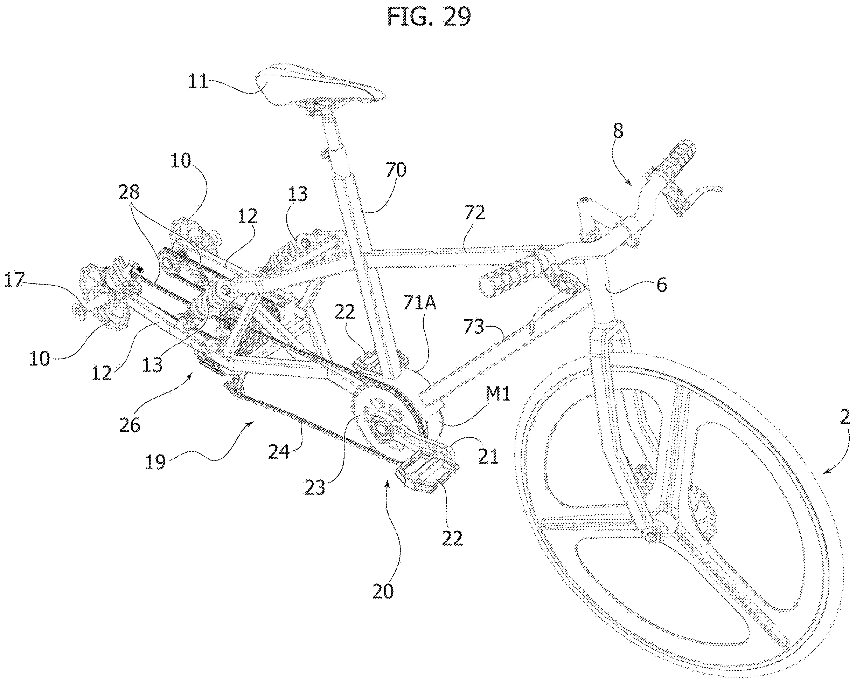

Figure 29 illustrates an arrangement wherein the motor associated with the pedal crank assembly is a transverse or radial flow motor M1 designed for low rotational speeds, axially shallow, but with a large diameter rotor, and in combination with it a speed change gear change device 26 is used, associated with the intermediate shaft 25, with pinion pack and derailleur. Also in this case, to allow energy recovery, free wheels are positioned between the pedal cranks 21 and the crankshaft.

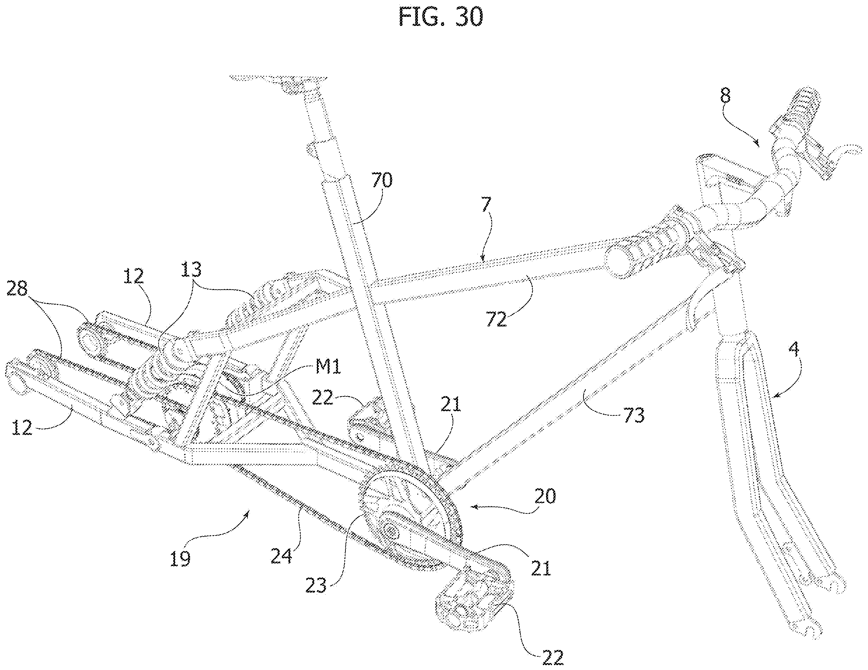

Figure 30 illustrates an example wherein an axial flux electric motor M1 is arranged on the intermediate shaft 25. In this case, both on the pedal crank assembly 20 and on the side of the motor M1, there is only one crown gear, respectively, 23 and 27, with a defined diameter. A free wheel is placed between the intermediate shaft 25 and the crown gear 27, thus allowing energy recovery. In this configuration, energy recovery takes place without the front transmission chain 24 being in motion that is placed between the intermediate shaft 25 and the pedal crank assembly.

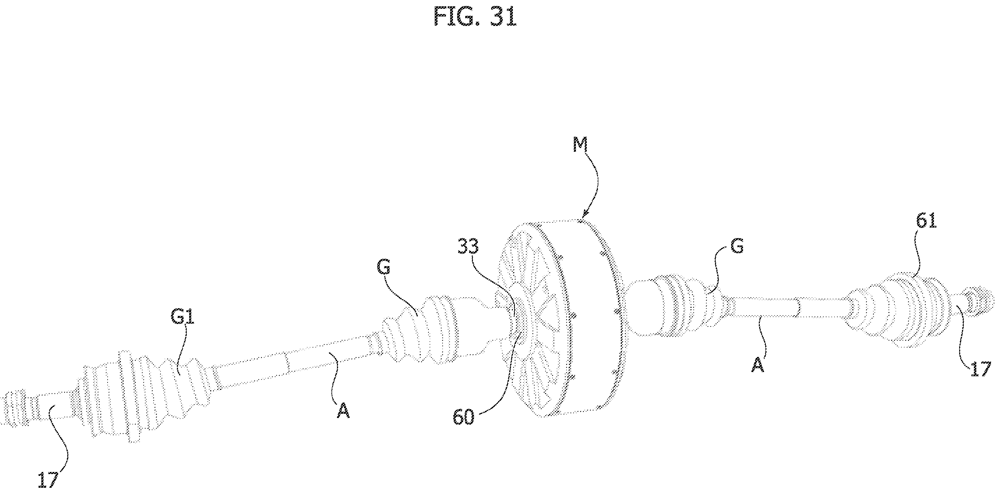

In an alternative solution illustrated in Figure 31, an axial flow electric motor M is arranged in the space between the two rear wheels 3. The axial flux motor M has a diameter of, for example, 170 mm - 300 mm, and is configured-designed to have a low rotation speed (for example, between 0 rpm and 250 rpm). In a preferred example, the motor M has a multi-stage configuration, for example, of the type illustrated in Figure 25, with two rotors and three stators, or of the type with three rotors, one of which is central, and two stators, interposed between the central rotor and two outer rotors. The rotors of the motor M of Figure 31 are rigidly connected on a shaft 33, which is rotatably supported by stator ring bearings. The shaft 33 has ends protruding on opposite sides from the body of the axial flow electric motor M1, which are connected by homokinetic joints G of any known type with two axle shafts A connected by two additional homokinetic joints G1 to the pins 17 of the rear wheels 3.

The object of the configuration of Figure 31 is to eliminate the reducer differential without losing the control characteristics of the rotation in curves, and with the possibility of the two wheels to act on their suspensions independently of each other. In this case, the two wheels of the vehicle may rotate as if they were connected to a differential gear. The described configuration may also be implemented with an axial flux motor of the type in Figure 9, with a crown gear placed in the center of the motor in direct connection with the crown gear placed on the pedal crank assembly.

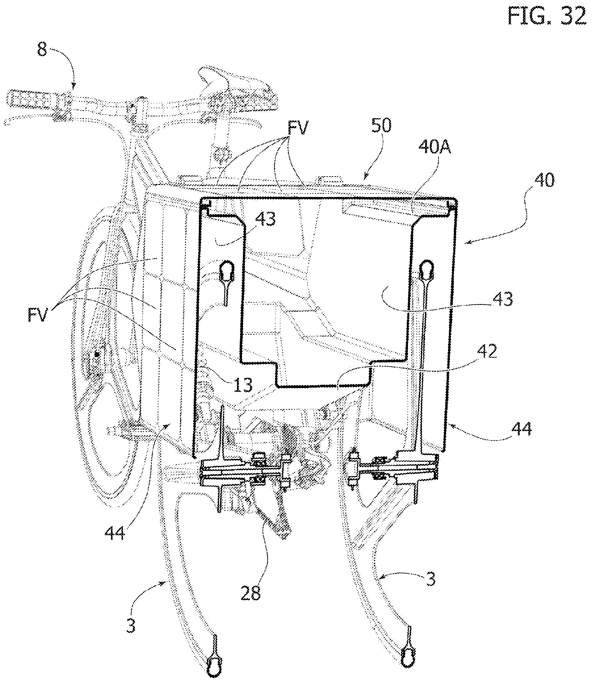

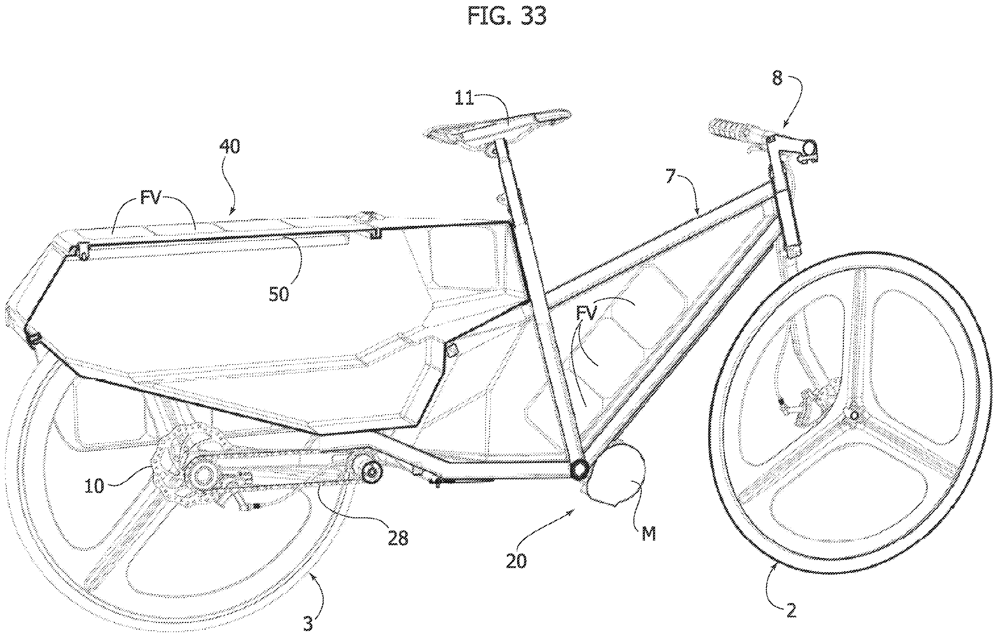

Figures 32 and 33 are partially cross-sectioned perspective views showing the configuration of a luggage container 40 used in an embodiment example of the vehicle in a "cargo" configuration with an object-carrying rack. In the example illustrated, the container 40 is mounted on the frame 7 of the vehicle, also with the aid of a rear central arm 41 (Figure 11) projecting rearwardly from the reticular structure 74 of the frame, and also having a tube structure with a square cross-section to which a plate 80 (not illustrated) is fixed, with the object of facilitating the fixing of the tubular structure integrated to the rack-container. As can be seen more clearly in Figure 32, the luggage container 40 has a body with a lower wall 42 and two side walls 43 arranged in the space between the two rear wheels 3. The body of the container has an enlarged upper portion 43, which protrudes outside the two rear wheels 3, and which can, for example, be dimensioned adequately to receive therein large containers, for example, containers for pizza. From the upper portion 43 of the container 40 two side walls 44 hang downwards, arranged on the outside of the two rear wheels 3, which carry a distribution of photovoltaic solar cells PV. With reference to Figure 1, photovoltaic solar panels PV are also arranged on an upper cover 50 of the luggage container 40 and on two side panels carried by the longitudinal tubes 72, 73.

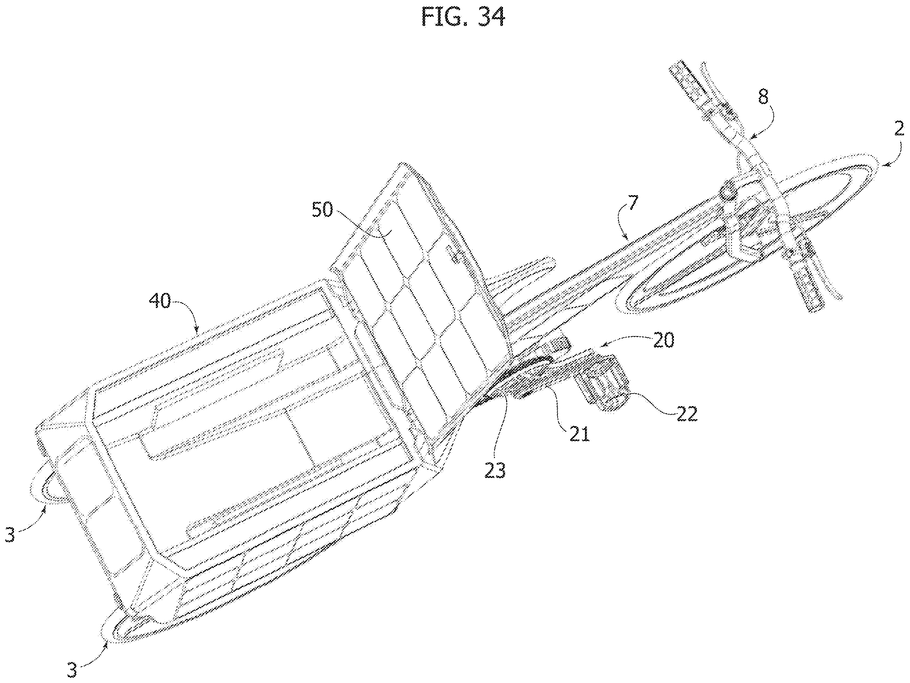

Figure 34 illustrates a thermal conditioning system of the rack to allow the transport of hot or cold food. A portion of the volume of the rack is kept warm by means of a nickel sheet or a kapton sheet with copper tracks, or a ventilated resistance, or even by means of a miniature microwave module, while a second portion is kept cool by means of a system with a module of the Peltier type or, for larger volumes, usually used for cargo configurations, by means of a miniaturized heat pump as described by the Applicant in the document WO2020/02060082 A1.

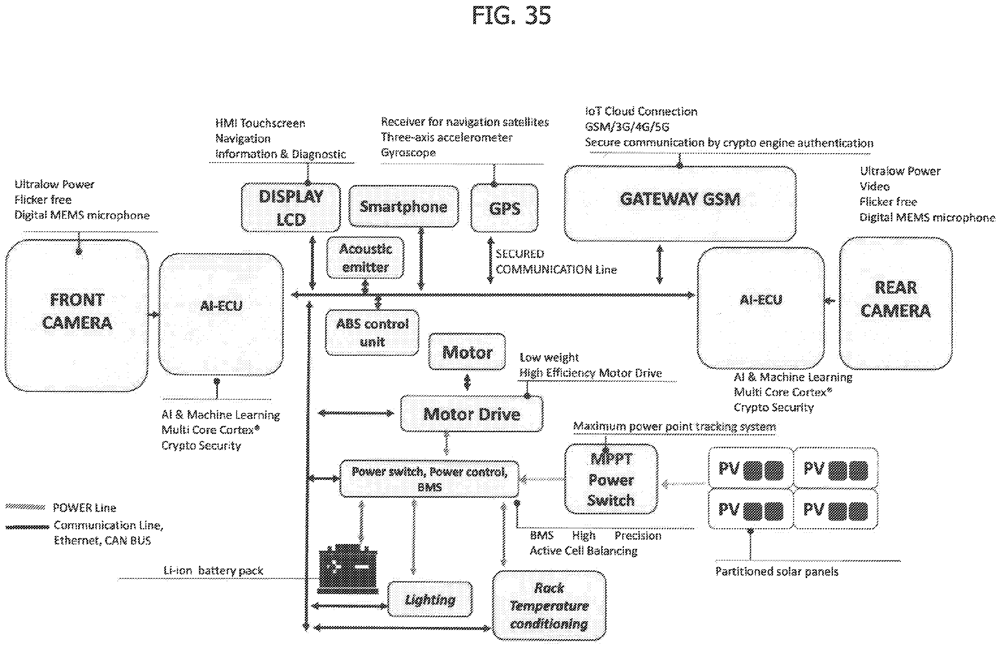

Figure 35 illustrates an example example of the overall electrical-electronic architecture associated with the vehicle according to the invention. By way of non-binding example, there are two cameras located, respectively, on the front and rear of the vehicle. In the example, the cameras are integrated, for example, in a board equipped with a processor of the Arduino Portenta family type H7, H8 or Hxx, with an integrated Artificial Intelligence (AI) and Machine Learning system of the Multicore Cortex type which - in turn - implements techniques of cryptography to maximize the level of **IT** security. A gateway is also provided for communication with infrastructures, firmware updates and remote preventive maintenance, for example, an electronic board of the Arduino MKR GSM family or of the impulse Edge type or of the STm32 family, all equipped with a data transmission system with high security against data hacking.

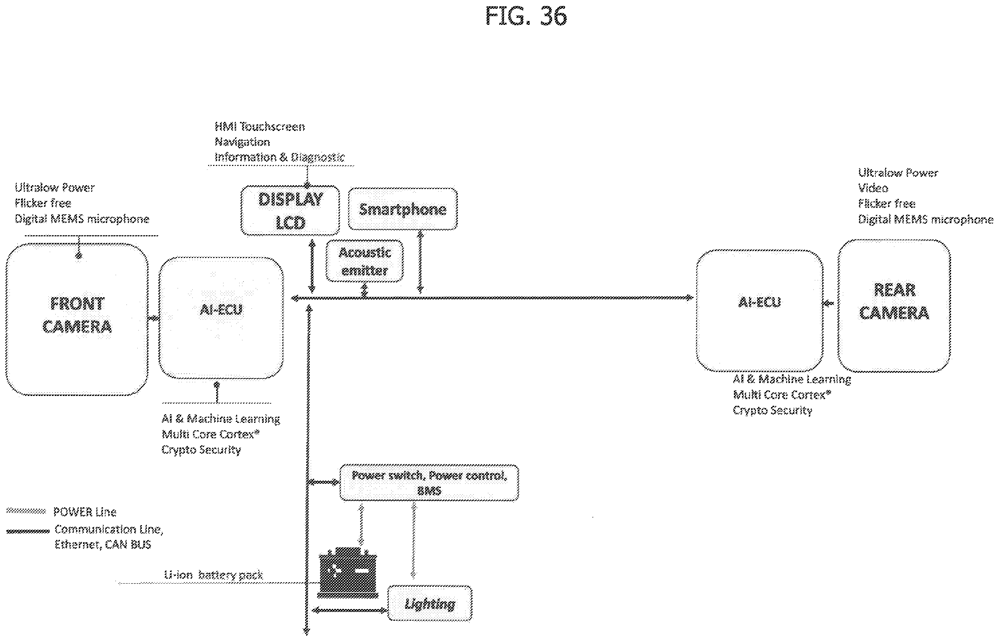

Figure 36 illustrates a detail of Figure 35; a first front camera analyzes the road in the direction of motion, while a second camera analyzes the rear of the vehicle. The image processing produces an acoustic signal that informs the cyclist of the danger. The vision system, in addition to signaling a dangerous situation to the cyclist via an acoustic signal, may also activate the vehicle lighting system to inform who is behind or in front of the vehicle.

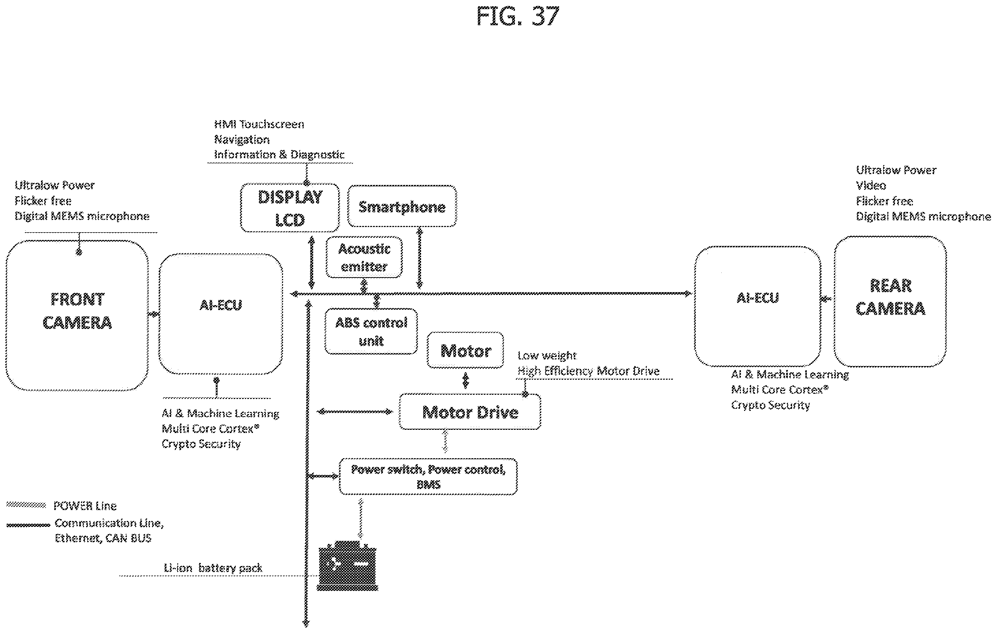

Figure 37 illustrates an additional detail of Figure 35, The processing of the images acquired by the camera placed at the front are used to act on the motor unit in order to reduce the speed in case a danger is detected. Functionality: The vision system operates on the motor to cause slowing down equivalent to assisted braking as well as informing of the dangerous situation by means of beeping. The sensory system may be equipped with ultrasonic sensors, for example, of the Arduino family or more generally of the type used in the automotive world.

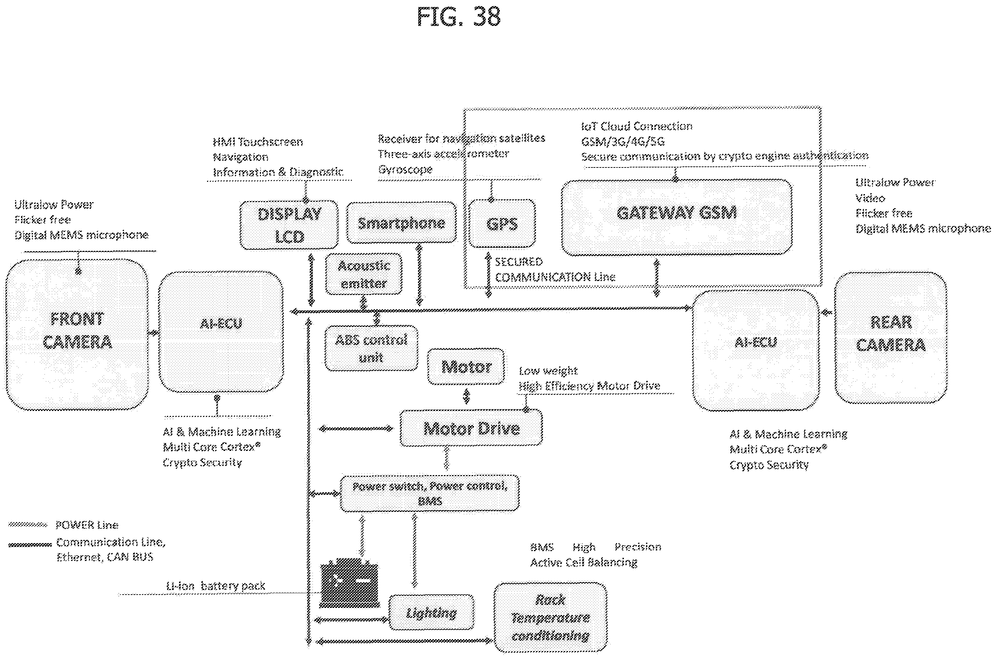

Figure 38 illustrates an additional detail of Figure 35 with reference to the remote data communication system, with integration of a GPS-GSM system integrated in a gateway. The system is thus able to inform the rider of what is happening around the vehicle and possibly block the operation of the motor. The owner can ask remotely to see what is happening around the vehicle. Therefore, it is the vehicle that informs the owner or the owner who asks for information.

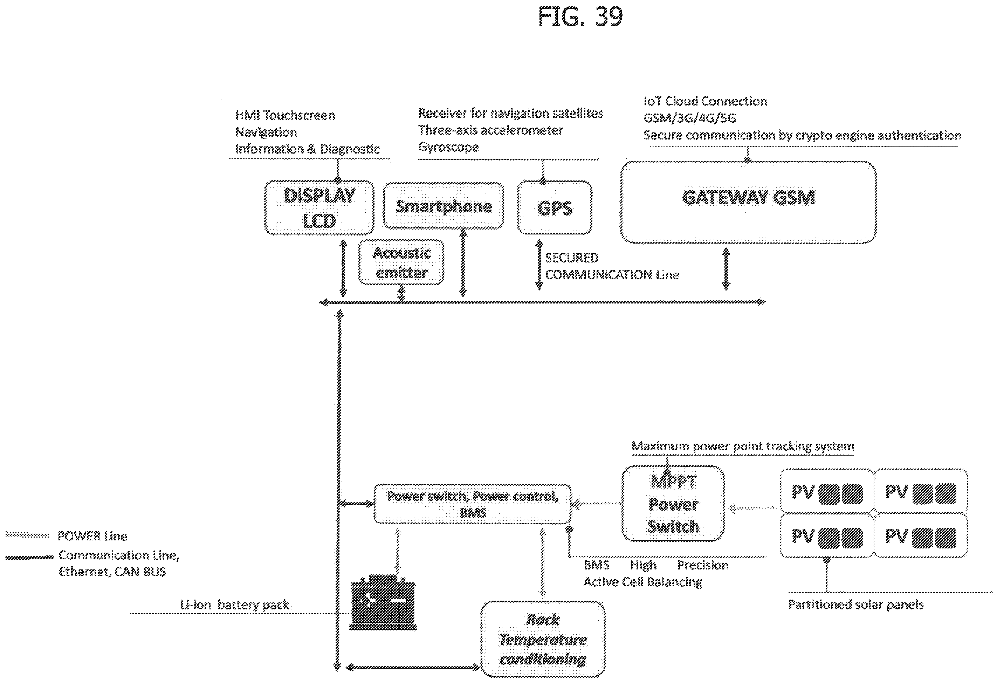

Figure 39 illustrates an additional detail of the machine of Figure 35. The system records the temperatures in the rack and certifies the temperature range during transport. The temperature range may be sent remotely to a mobile phone or to a data collection server.

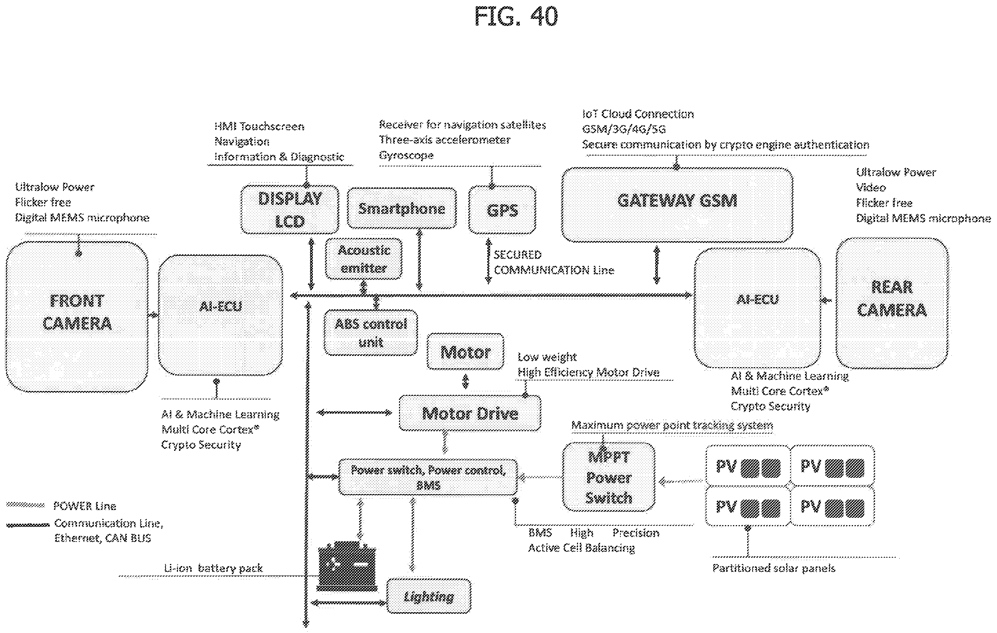

Figure 40 illustrates an additional detail of Figure 35 relating to the power supply mode of the battery pack by means of photovoltaic cells, wherein said cells are also used for actively balancing the sub-modules of the battery pack, according to a method described in the Italian patent applications IT 102021000010370 and IT 102021000010373, still secret at the priority date of this application. The system informs the owner about the charge available in the battery and, in particular, how much the photovoltaic panels are contributing to recharge the vehicle battery.

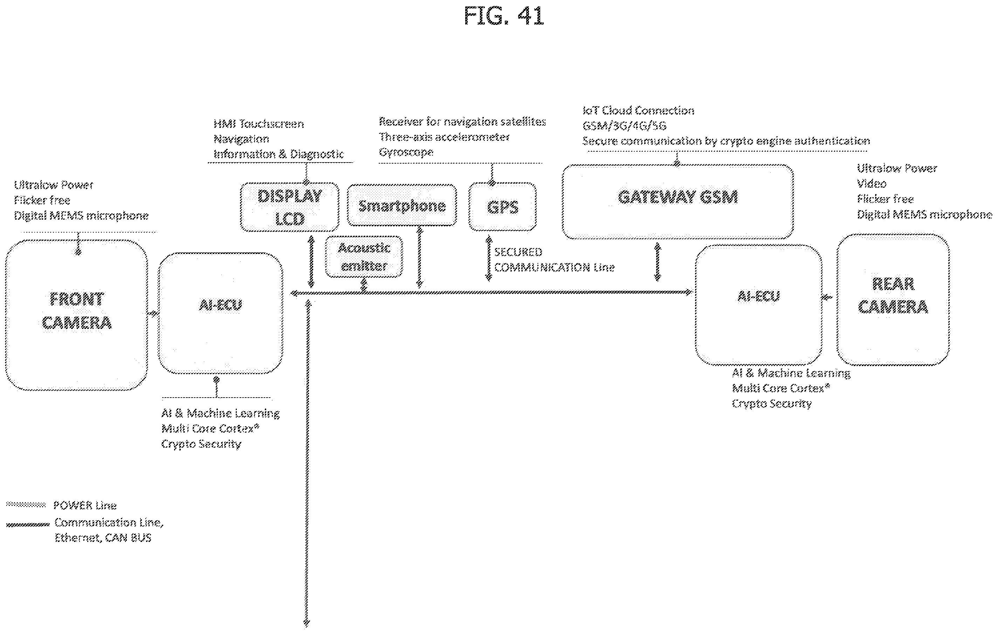

Figure 41 illustrates an additional detail of Figure 35. The system may allow real-time communication between a vehicle user, who is for example carrying out a delivery service, and a customer who uses this service, in order to manage the acceptance of orders and/or the sending of information on the delivery status and/or for route optimization.

Of course, without prejudice to the principle of the invention, the details of construction and the embodiments may vary widely with respect to those described and illustrated purely, without departing from the scope of the present invention, as defined by the attached claims.

## Claims

1. A vehicle of the ride-on type, comprising a frame (7) carrying a saddle (11), a front wheel assembly (2) carried by a steering unit (4, 5) associated with the frame (7), two rear wheels (3) carried by the frame (7), and a pedal crank assembly (20) rotatably mounted on the frame (7), and connected to the hubs of the two rear wheels (3) by means of a transmission system (19),
wherein:
- the two rear wheels (3) of the vehicle are rotatably mounted on two respective longitudinal arms (12) mounted pivoting on the frame (7) of the vehicle around a common axis (3A), transverse with respect to the vertical longitudinal plane of the vehicle,
- respective elastic assemblies (13) are operationally interposed between the two longitudinal arms (12) and the frame (7) of the vehicle,
- the transmission system (19) includes:
- an intermediate transmission shaft
- a toothed belt, or chain, for front transmission (24), which connects an outlet wheel (23) of said pedal crank assembly (20) with said intermediate transmission shaft (25), and
- two toothed belts or chains of rear transmission (28), which connect said intermediate transmission shaft (25) with the hubs (18) of the two rear wheels (3), and
wherein the front wheel assembly comprises a single front wheel (2) or two front wheels (2) side-by-side and spaced apart, each equipped with a respective suspension (4A) and a respective braking system (10),
the vehicle being **characterized in that** the frame of the vehicle comprises:
- a saddle-holder tube (70), having an upper end bearing the saddle (11) and a lower end (71) supporting the pedal crank assembly (20),
- an upper longitudinal tube (72) and a lower longitudinal tube (73), which connect said saddle-holder tube (70) to a pipe (6) which rotates a steering shaft (5) carrying a front fork (4) of the vehicle,
- a rear reticular structure (74), with quadrangular cross-section and/or variable cross-section tubes, including a lower rear fork (75) ending with two support ends (76) to which the two longitudinal arms (12) are articulated, and one upper rear fork (77) for attaching said elastic assemblies (13); and
said intermediate transmission shaft (25) is rotatably mounted on the frame (7) around said transverse pivoting axis (3A) of the two longitudinal arms (12).

2. A vehicle according to claim 1, **characterized in that** the distance between the two rear wheels (3) is of an interval from 10 cm to 16 cm, and is, therefore, sufficiently small to allow the pedal cranks (21) of the vehicle to rotate outside of the two rear wheels (3) without interfering with the rear wheels, so as to allow a relatively limited overall length of the vehicle.

3. A vehicle according to claim 1, **characterized in that** the distance between the two rear wheels (3) is of an interval from 16 cm to 35 cm, so as to allow greater stability of the vehicle, and the provision of a relatively wide luggage container (40), which also extends into the space between the two rear wheels, the frame (7) of the vehicle being configured to keep the axis of the pedal crank assembly (20) sufficiently spaced apart to prevent interference between the pedal cranks (21) and the rear wheels (3).

4. A vehicle according to claim 1, **characterized in that** a disc brake (9,10) provided with a manual or electric or fluid drive system is associated with said front wheel (2) and each of said rear wheels (3).

5. A vehicle according to claim 1, **characterized in that** each of said longitudinal arms (12) consists of a tube with a quadrangular section and/or a variable section.

6. A vehicle according to claim 1, **characterized in that** the frame (7) also includes a longitudinal central arm (41) projecting rearwardly from said rear reticular structure (74), and carrying a plate (80) for supporting a luggage container (40) of the vehicle.

7. A vehicle according to claim 1, **characterized in that** it comprises a luggage container (40) arranged in a space between the two rear wheels (7), and having an enlarged upper portion (40A), protruding outside the two rear wheels (3) from which two side walls (44) hang, arranged on the outside of the two rear wheels (3) bearing a partition of photovoltaic solar cells (PV), to supply electrical energy to a vehicle battery which powers an electric motor of the vehicle.

8. A vehicle according to claim 7, **characterized in that** said luggage container (40) has an upper cover (50) carrying a distribution of photovoltaic solar cells (PV).

9. A vehicle according to claim 7, **characterized in that** said luggage container (40) is equipped with thermal conditioning devices, in such a way as to allow the properties of the transported product to be maintained.

10. A vehicle according to claim 1, **characterized in that** the upper longitudinal tube (72) and the lower longitudinal tube (73) support side panels carrying a distribution of photovoltaic solar cells (PV).

11. A vehicle according to claim 1, **characterized in that** it comprises an axial flux electric motor (M1) carried by the vehicle frame (7) and associated with the pedal crank assembly (20) or with said intermediate transmission shaft (25).

12. A vehicle according to claim 11, **characterized in that** said axial flux electric motor (M1) is configured to have a relatively low rotation speed, in the range of 0 rpm - 250 rpm, and a relatively large diameter, in the range of 150 mm - 300 mm, in such a way as to generate relatively high peak torques, without the use of gears.

13. A vehicle according to claim 11, **characterized in that**:
- the axial flux electric motor (M1) includes a motor body (34), with at least one stator ring (S), carried by the vehicle frame (7), and at least one rotor ring (R) carried by a crankshaft (33), which is rotatably supported within the body (34) of the axial flux electric motor (M1),
- said at least one rotor ring (R) of said axial flow electric motor (M1) is connected in rotation, directly or indirectly, with said outlet wheel (23) of the pedal crank assembly (20),
- the pedal cranks (21) of the pedal crank assembly are mounted on said crankshaft (33),
- at least one free wheel (35; 35') is interposed between each pedal crank (21) and said outlet wheel (23) of the pedal crank assembly, said at least one free wheel (35; 35') being configured in such a way that the outlet wheel (23) of the pedal crank assembly (20) is permanently connected in rotation with the rear wheels (3) of the vehicle even when the pedal cranks (21) are stationary, which allows the axial flow electric motor (M1) to operate as a generator in the operating conditions wherein the rear wheels (3) drive the motor (M1) in rotation.

## Patentansprüche

1. Fahrzeug von Aufsitztyp, umfassend ein Gestell (7), das einen Fahrsattel (11) trägt, eine Vorderradanordnung (2), die von einer dem Gestell (7) zugeordneten Lenkeinheit (4, 5) getragen wird, zwei Hinterräder (3), die von dem Gestell (7) getragen werden, und eine Pedalkurbelanordnung (20), die drehbar an dem Gestell (7) angebracht ist und mittels eines Übertragungssystems (19) mit den Naben der zwei Hinterräder (3) verbunden ist,
wobei:
- die zwei Hinterräder (3) des Fahrzeugs drehbar an zwei jeweiligen Längsarmen (12) angebracht sind, die schwenkbar am Gestell (7) des Fahrzeugs um eine gemeinsame Achse (3A) quer zur vertikalen Längsebene des Fahrzeugs angebracht sind,
- jeweilige elastische Anordnungen (13) betriebsbereit zwischen den zwei Längsarmen (12) und dem Gestell (7) des Fahrzeugs eingefügt sind,
- das Übertragungssystem (19) Folgendes einschließt:
- eine Zwischenübertragungswelle
- einen Zahnriemen, oder eine Kette, für die vordere Übertragung (24), der bzw. die ein Abtriebsrad (23) der Pedalkurbelanordnung (20) mit der Zwischenübertragungswelle (25) verbindet, und
- zwei Zahnriemen oder Ketten der hinteren Übertragung (28), die die Zwischenübertragungswelle (25) mit den Naben (18) der zwei Hinterräder (3) verbinden, und
wobei die Vorderradanordnung ein einziges Vorderrad (2) oder zwei Vorderräder (2) nebeneinander und voneinander beabstandet umfasst, jeweils mit einer jeweiligen Aufhängung (4A) und einem jeweiligen Bremssystem (10) ausgestattet,
wobei das Fahrzeug **dadurch gekennzeichnet ist, dass** das Gestell des Fahrzeugs umfasst:
- ein Fahrsattelhalterrohr (70), das ein den Fahrsattel (11) haltendes oberes Ende und ein unteres Ende (71), das die Pedalkurbelanordnung (20) stützt, aufweist,
- ein oberes Längsrohr (72) und ein unteres Längsrohr (73), die das Fahrsattelhalterrohr (70) mit einem Rohrstück (6) verbinden, das eine Lenkwelle (5) dreht, die eine vordere Traggabel (4) des Fahrzeugs trägt,
- eine hintere netzartige Struktur (74) mit rechteckigem Querschnitt und/oder Rohren mit variablem Querschnitt, einschließlich einer unteren Traggabel (75), die mit zwei Stützenden (76) endet, an denen die zwei Längsarme (12) angelenkt sind, und einer oberen Traggabel (77) zum Befestigen der elastischen Anordnungen (13); und
wobei die Zwischenübertragungswelle (25) drehbar an dem Gestell (7) um die querverlaufende Schwenkachse (3A) der zwei Längsarme (12) angebracht ist.

2. Fahrzeug nach Anspruch 1, **dadurch gekennzeichnet, dass** der Abstand zwischen den zwei Hinterrädern (3) ein Intervall von 10 cm bis 16 cm ist und daher ausreichend klein ist, um zu ermöglichen, dass die Pedalkurbeln (21) des Fahrzeugs sich außerhalb der zwei Hinterrädern (3) drehen, ohne in die Hinterräder einzugreifen, um so eine relativ begrenzte Gesamtlänge des Fahrzeugs zu ermöglichen.

3. Fahrzeug nach Anspruch 1, **dadurch gekennzeichnet, dass** der Abstand zwischen den zwei Hinterrädern (3) ein Intervall von 16 cm bis 35 cm ist, um so eine größere Stabilität des Fahrzeugs und die Bereitstellung eines relativ breiten Gepäckbehälters (40) zu ermöglichen, der sich auch in den Raum zwischen den zwei Hinterrädern erstreckt, wobei das Gestell (7) des Fahrzeugs konfiguriert ist, um die Achse der Pedalkurbelanordnung (20) ausreichend beabstandet zu halten, um ein Eingreifen zwischen den Pedalkurbeln (21) und den Hinterrädern (3) zu verhindern.

4. Fahrzeug nach Anspruch 1, **dadurch gekennzeichnet, dass** eine Scheibenbremse (9,10), die mit einem manuellen oder elektrischen oder Fluidantriebssystem bereitgestellt ist, dem Vorderrad (2) und jedem der Hinterräder (3) zugeordnet ist.

5. Fahrzeug nach Anspruch 1, **dadurch gekennzeichnet, dass** jeder der Längsarme (12) aus einem Rohr mit einem rechteckigen Querschnitt und/oder einem variablen Abschnitt besteht.

6. Fahrzeug nach Anspruch 1, **dadurch gekennzeichnet, dass** das Gestell (7) auch einen mittleren Längsarm (41) einschließt, der von der netzartigen Struktur (74) nach hinten vorragt und eine Platte (80) zum Stützen eines Gepäckbehälters (40) des Fahrzeugs trägt.

7. Fahrzeug nach Anspruch 1, **dadurch gekennzeichnet, dass** es einen Gepäckbehälter (40) umfasst, der in einem Raum zwischen den zwei Hinterrädern (7) angeordnet ist, und einen vergrößerten oberen Abschnitt (40A) aufweist, der außerhalb der zwei Hinterräder (3) vorragt, von dem zwei Seitenwände (44) herabhängen, der auf der Außenseite der zwei Hinterräder (3) angeordnet ist und eine Teilung von Photovoltaik-Solarzellen (PV) trägt, um einer Fahrzeugbatterie, die einen Elektromotor des Fahrzeugs antreibt, elektrische Energie zuzuführen.

8. Fahrzeug nach Anspruch 7, **dadurch gekennzeichnet, dass** der Gepäckbehälter (40) eine obere Abdeckung (50) aufweist, die eine Aufteilung der Photovoltaik-Solarzellen (PV) trägt.

9. Fahrzeug nach Anspruch 7, **dadurch gekennzeichnet, dass** der Gepäckbehälter (40) auf solche Weise mit Wärmeanlagenvorrichtungen ausgestattet ist, dass ermöglicht wird, dass die Eigenschaften des transportierten Produkts beibehalten werden.

10. Fahrzeug nach Anspruch 1, **dadurch gekennzeichnet, dass** das obere Längsrohr (72) und das untere Längsrohr (73) Seitenplatten stützen, die eine Aufteilung von Photovoltaik-Solarzellen (PV) tragen.

11. Fahrzeug nach Anspruch 1, **dadurch gekennzeichnet, dass** es einen Axialfluss-Elektromotor (M1) umfasst, der von dem Fahrzeuggestell (7) getragen wird und der Pedalkurbelanordnung (20) oder der Zwischenübertragungswelle (25) zugeordnet ist.

12. Fahrzeug nach Anspruch 11, **dadurch gekennzeichnet, dass** der Axialfluss-Elektromotor (M1) konfiguriert ist, um eine relativ geringe Drehzahl, im Bereich von 0 rpm - 250 rpm, und einen relativ großen Durchmesser, im Bereich von 150 mm - 300 mm, auf solche Weise aufzuweisen, dass relativ hohe Spitzendrehmomente ohne Verwendung der Gänge erzeugt werden.

13. Fahrzeug nach Anspruch 11, **dadurch gekennzeichnet ist, dass**:
- der Axialfluss-Elektromotor (M1) einen Motorkörper (34) einschließt, mit mindestens einem Statorring (S), der von dem Fahrzeuggestell (7) getragen wird, und mindestens einem Rotorring (R), der von einer Kurbelwelle (33) getragen wird, der drehbar innerhalb der Körpers (34) des Axialfluss-Elektromotors (M1) gestützt wird,
- der mindestens eine Rotorring (R) des Axialfluss-Elektromotors (M1) direkt oder indirekt drehend mit dem Abtriebsrad (23) der Pedalkurbelanordnung (20) verbunden ist,
- die Pedalkurbeln (21) der Pedalkurbelanordnung an der Kurbelwelle (33) angebracht sind,
- mindestens ein freies Rad (35; 35') zwischen jeder Pedalkurbel (21) und dem Abtriebsrad (23) der Pedalkurbelanordnung eingefügt ist, wobei das mindestens eine freie Rad (35; 35') auf solche Weise konfiguriert ist, dass das Abtriebsrad (23) der Pedalkurbelanordnung (20) ununterbrochen drehend mit den Hinterrädern (3) des Fahrzeugs verbunden ist, selbst wenn die Pedalkurbeln (21) stationär sind, wodurch ermöglicht wird, dass der Axialfluss-Elektromotor (M1) in den Betriebsbedingungen, bei denen die Hinterräder (3) den Motor (M1) drehend antreiben, als Generator arbeitet.

## Revendications

1. Véhicule du type à conducteur porté, comprenant un cadre (7) portant une selle (11), un ensemble roue avant (2) porté par une unité de direction (4, 5) associée au cadre (7), deux roues arrière (3) portées par le cadre (7), et un ensemble pédalier (20) monté rotatif sur le cadre (7), et relié aux moyeux des deux roues arrière (3) au moyen d'un système de transmission (19),
dans lequel :
- les deux roues arrière (3) du véhicule sont montées rotatives sur deux bras longitudinaux (12) respectifs montés pivotants sur le cadre (7) du véhicule autour d'un axe commun (3A), transversal par rapport au plan longitudinal vertical du véhicule,
- des ensembles élastiques respectifs (13) sont interposés fonctionnellement entre les deux bras longitudinaux (12) et le cadre (7) du véhicule,
- le système de transmission (19) inclut :
- un arbre intermédiaire de transmission
- une courroie ou chaîne crantée de transmission avant (24), qui relie une roue de sortie (23) dudit ensemble pédalier (20) audit arbre intermédiaire de transmission (25), et
- deux courroies ou chaînes crantées de transmission arrière (28), qui relient ledit arbre intermédiaire de transmission (25) aux moyeux (18) des deux roues arrière (3), et
dans lequel l'ensemble roue avant comprend une seule roue avant (2) ou deux roues avant (2) côte à côte et espacées, chacune équipée d'une suspension (4A) respective et d'un système de freinage (10) respectif,
le véhicule étant **caractérisé en ce que** le cadre du véhicule comprend :
- un tube porte-selle (70), présentant une extrémité supérieure portant la selle (11) et une extrémité inférieure (71) supportant l'ensemble pédalier (20),
- un tube longitudinal supérieur (72) et un tube longitudinal inférieur (73), qui relient ledit tube porte-selle (70) à un tuyau (6) qui entraîne en rotation un arbre de direction (5) portant une fourche avant (4) du véhicule,
- une structure réticulaire arrière (74), avec des tubes de section quadrangulaire et/ou de section variable, incluant une fourche arrière inférieure (75) se terminant par deux extrémités de support (76) auxquelles sont articulés les deux bras longitudinaux (12), et une fourche arrière supérieure (77) pour fixer lesdits ensembles élastiques (13) ; et
ledit arbre intermédiaire de transmission (25) est monté rotatif sur le cadre (7) autour dudit axe transversal de pivotement (3A) des deux bras longitudinaux (12).

2. Véhicule selon la revendication 1, **caractérisé en ce que** la distance entre les deux roues arrière (3) est d'un intervalle de 10 cm à 16 cm, et est donc suffisamment réduite pour permettre aux manivelles de pédale (21) du véhicule de tourner à l'extérieur des deux roues arrière (3) sans interférer avec les roues arrière, de manière à permettre une longueur totale du véhicule relativement limitée.

3. Véhicule selon la revendication 1, **caractérisé en ce que** la distance entre les deux roues arrière (3) est d'un intervalle de 16 cm à 35 cm, de manière à permettre une plus grande stabilité du véhicule, et par la fourniture d'un conteneur à bagages (40) relativement large, qui s'étend également dans l'espace entre les deux roues arrière,
le cadre (7) du véhicule étant configuré pour maintenir l'axe de l'ensemble pédalier (20) suffisamment espacé pour empêcher une interférence entre les manivelles de pédale (21) et les roues arrière (3).

4. Véhicule selon la revendication 1, **caractérisé en ce qu'**un frein à disque (9, 10) muni d'un système d'entraînement manuel, électrique ou fluidique est associé à ladite roue avant (2) et à chacune desdites roues arrière (3).

5. Véhicule selon la revendication 1, **caractérisé en ce que** chacun desdits bras longitudinaux (12) est constitué d'un tube de section quadrangulaire et/ou de section variable.

6. Véhicule selon la revendication 1, **caractérisé en ce que** le cadre (7) inclut également un bras central longitudinal (41) faisant saillie vers l'arrière depuis ladite structure réticulaire arrière (74), et portant une plaque (80) de support d'un conteneur à bagages (40) du véhicule.

7. Véhicule selon la revendication 1, **caractérisé en ce qu'**il comprend un conteneur à bagages (40) disposé dans un espace entre les deux roues arrière (7),
et présentant une partie supérieure élargie (40A), faisant saillie à l'extérieur des deux roues arrière (3), depuis laquelle deux parois latérales (44) sont suspendues, disposées à l'extérieur des deux roues arrière (3), portant une cloison de cellules solaires photovoltaïques (PV) pour fournir de l'énergie électrique à une batterie de véhicule qui alimente un moteur électrique du véhicule.

8. Véhicule selon la revendication 7, **caractérisé en ce que** ledit conteneur à bagages (40) présente un capot supérieur (50) portant une distribution de cellules solaires photovoltaïques (PV).

9. Véhicule selon la revendication 7, **caractérisé en ce que** ledit conteneur à bagages (40) est équipé de dispositifs de conditionnement thermique, de manière à permettre de préserver les propriétés du produit transporté.

10. Véhicule selon la revendication 1, **caractérisé en ce que** le tube longitudinal supérieur (72) et le tube longitudinal inférieur (73) supportent des panneaux latéraux portant une distribution de cellules solaires photovoltaïques (PV).

11. Véhicule selon la revendication 1, **caractérisé en ce qu'**il comprend un moteur électrique à flux axial (M1) porté par le cadre (7) de véhicule et associé à l'ensemble pédalier (20) ou audit arbre intermédiaire de transmission (25).

12. Véhicule selon la revendication 11, **caractérisé en ce que** ledit moteur électrique à flux axial (M1) est configuré pour présenter une vitesse de rotation relativement faible, s'inscrivant entre 0 tr/min et 250 tr/min, et un diamètre relativement élevé, s'inscrivant entre 150 mm et 300 mm, de manière à générer des couples de pointe relativement élevés, sans l'utilisation d'engrenages.

13. Véhicule selon la revendication 11, **caractérisé en ce que** :
- le moteur électrique à flux axial (M1) inclut un corps de moteur (34), avec au moins un anneau de stator (S), porté par le cadre de véhicule (7), et au moins un anneau de rotor (R) porté par un vilebrequin (33), qui est supporté rotatif à l'intérieur du corps (34) du moteur électrique à flux axial (M1),
- ledit au moins un anneau de rotor (R) dudit moteur électrique à flux axial (M1) est relié rotatif directement ou indirectement à ladite roue de sortie (23) de l'ensemble pédalier (20),
- les manivelles de pédale (21) de l'ensemble pédalier sont montées sur ledit vilebrequin (33),
- au moins une roue libre (35 ; 35') est interposée entre chaque manivelle de pédale (21) et ladite roue de sortie (23) de l'ensemble pédalier,
ladite au moins une roue libre (35 ; 35') étant configurée de sorte que la roue de sortie (23) de l'ensemble pédalier (20) est reliée rotative de manière permanente aux roues arrière (3) du véhicule même lorsque les manivelles de pédale (21) sont fixes, ce qui permet au moteur électrique à flux axial (M1) de fonctionner en générateur dans les conditions de fonctionnement dans lesquelles les roues arrière (3) entraînent le moteur (M1) en rotation.
